# EUROPEAN PATENT APPLICATION

(11) **EP 4 749 469 A2**
(43) Date of publication of application: **27.05.2026**
(21) Application number: 25209151.7
(22) Date of filing: 16.10.2025
(51) Int. Cl.: G06F 13/28

(54) **RING DATA-STRUCTURE FOR DATA OPERATIONS**

(30) Priority: 07.11.2024 US 202418940467
(71) Applicant: Microsoft Technology Licensing, LLC, Redmond, WA 98052 (US)
(72) Inventor: Interlandi, Matteo, Redmond, WA, 98052 (US); Curino, Carlo Aldo, Redmond, WA, 98052 (US); Saur, Karla Jean, Seattle, WA, 98121 (US); Jasny, Matthias Christian, 65439 Flörsheim am Main (DE)
(74) Representative: Grünecker Patent- und Rechtsanwälte PartG mbB

(57) **Abstract**

Systems, methods, and techniques are directed to data operations utilizing ring data-structures. A device comprises a network interface controller (NIC) and a ring data-structure comprising a first ring comprising pointers indicating memory regions that are empty and a second ring comprising pointers indicating regions that store data. In an aspect, the NIC receives a write request and determines a region to write data to based on the first ring. The NIC writes the data to the region and updates the second region to include a pointer to the region. In another aspect, the NIC receives a read request to read data and determines a region to read data from based on a pointer in the second ring. The NIC reads the data from the region. In a further aspect, the NIC is a one-sided remote direct memory access (RDMA) NIC and reads/writes utilizing low-level operations.

## Description

### BACKGROUND

In computing systems, data transfers occur between different devices and/or services executed by devices. Transferring between devices or services (also referred to as "shuffling") takes time and compute resources. These transfer operations can rely on communication patterns in some implementations. Furthermore, computing devices transferring data to another computing device can operate at different rates than the receiving device. This can lead to a bottleneck where the receiving device is unable to receive additional data and the providing device has to wait for available bandwidth to continue sending data to the receiving device.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Embodiments described herein provide a ring data-structure for use in data operations. In an aspect, a device comprises a ring data-structure comprising a first ring buffer (also referred to as a "first ring" herein) and a second ring buffer (also referred to as a "second ring" herein). The first ring is configured to comprise pointers that indicate a respective address of a memory region that is empty. The second ring is configured to comprise pointers that indicate a respective address of a memory region that stores data. A network interface controller (NIC) receives a write request for writing data to a memory region. The NIC determines, based on a pointer of the first ring, an address of an empty memory region. The NIC causes data to be written to the empty memory region based on the address indicated by the pointer. The NIC updates the second ring to include the address of the memory region.

In a further aspect, the NIC is a target-side NIC of the data operation (e.g., a NIC of a consumer device or an intermediary device).

In another aspect, the NIC is an initiator-side NIC of the data operation (e.g., a NIC of a producer device).

In a further aspect, the device comprising the ring data-structure is a remote direct memory access (RDMA) device and the data operation is an RDMA operation.

In a further aspect, the data operation is a transmission control protocol (TCP) operation.

In a further aspect, the NIC receives the write request from a computing device. To determine the address of the empty memory region, the NIC causes the computing device to determine the address of the empty memory region.

In a further aspect, the NIC updates the first ring to no longer include the address of the memory region.

In another aspect, the NIC receives a read request for reading data. The NIC determines an address of a memory region that stores the data and reads the data from the memory region based on the address. The NIC provides the data to the requesting computing device (also referred to as a "consumer device"). The NIC updates a first ring buffer to comprise a pointer indicating the address of the memory region the data was stored in.

In another aspect, to determine the address of the memory region that stores the data, the NIC causes the consumer device to determine the address.

In another aspect, the NIC determines a storage capacity of a memory device satisfies a first storage criterion. The NIC transfers data from the memory device to a spill storage. The NIC updates the first ring to include a pointer indicating an address of the memory region the data was transferred from.

In a further aspect, the NIC determines the storage capacity of the memory device satisfies a second storage criterion. The NIC determines a memory region data stored in the spill storage is to be transferred to based on a pointer in the first ring. The NIC transfers the data stored in the spill storage to the memory region. The NIC updates the second ring to include a pointer to the memory region the data was transferred to.

### BRIEF DESCRIPTION OF THE DRAWINGS/FIGURES

The accompanying drawings, which are incorporated herein and form a part of the specification, illustrate embodiments and, together with the description, further serve to explain the principles of the embodiments and to enable a person skilled in the pertinent art to make and use the embodiments.
FIG. 1 shows a block diagram of an example system for transferring data utilizing a ring data-structure, in accordance with an example embodiment.
FIG. 2 shows a block diagram of an example system comprising the computing device of FIG. 1, in accordance with an example embodiment..
FIG. 3A shows a flowchart of a process for writing data utilizing a computing device with a ring data-structure, in accordance with an example embodiment.
FIG. 3B shows a flowchart of a process for reading data utilizing a computing device with a ring data-structure, in accordance with an example embodiment.
FIG. 4 shows a block diagram of a system for transferring data utilizing a ring data-structure and remote direct memory access, in accordance with an example embodiment.
FIG. 5 shows a flowchart of a process for writing data utilizing a remote direct memory access device with a ring data-structure, in accordance with an example embodiment.
FIG. 6 shows a flowchart of a process for reading data utilizing a remote direct memory access device with a ring data-structure, in accordance with an example embodiment.
FIG. 7 shows a flowchart of a process for reading data utilizing a computing device with a ring data-structure, in accordance with an example embodiment.
FIG. 8 shows a block diagram of a system for transferring data to and from a spill storage, in accordance with an example embodiment.
FIG. 9 shows a flowchart of a process for storing data in a spill storage, in accordance with an example embodiment.
FIG. 10 shows a flowchart of a process for accessing data in a spill storage, in accordance with an example embodiment.
FIG. 11 shows a block diagram of a system for prioritizing data availability, in accordance with an example embodiment.
FIG. 12 shows a flowchart of a process for prioritizing data availability, in accordance with an example embodiment.
FIG. 13 shows block diagram of a system for transferring data to a receiving computing device comprising a ring data-structure, in accordance with an example embodiment.
FIG. 14 shows a block diagram of a system for transferring data from a computing device comprising a ring data-structure, in accordance with an example embodiment.
FIG. 15 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Example Embodiments of Data Transfer Using a Ring Data-Structure

Embodiments of the present disclosure relate to query processing and other data applications. In particular, embodiments described herein relate to transferring data between computing devices in a network-based computing system (e.g., a cloud network computing system, an enterprise network computing system, and/or the like). For instance, data shuffling in distributed query processing and other data applications can take a significant amount of time. As an example, the amount of data a node (e.g., a physical node (e.g., a computing device) or a virtual node (e.g., a virtual machine, a container, and/or the like) executed by a computing device) can send to another node can be limited by the receiving node's capability to receive and process the data. In some implementations, a node (or an application executing thereon) utilizes a remote direct memory access (RDMA) operation to access memory of another node. In these implementations, a node is able to directly access memory of another node utilizing a network interface controller (NIC), also referred to as a "remote NIC". For instance, a first node directly accesses memory of a second node utilizing a NIC of a computing device of the first node that is communicatively coupled to a NIC of the computing device of the second node. In some implementations, an intermediary device comprising a NIC is used.

Embodiments of the present disclosure provide a ring data-structure for use in data operations. In an example, a computing device comprises a plurality of memory regions. The plurality of memory regions can be divided in various ways, depending on the implementation. For instance, in a non-limiting example, a memory region is a "data-chunk", or a (e.g., smallest) unit of a data transfer (e.g., an RDMA transfer). The computing device also comprises a first ring comprising pointers to memory regions of the plurality of memory regions that are empty and a second ring comprising pointers to memory regions of the plurality of memory regions that are full (e.g., that store data). In embodiments, a pointer indicates an address of a respective memory region. The computing device further comprises NIC that receives data operation requests (e.g., read requests, write requests, transfer requests, etc.) from nodes. Examples of data operations include, but are not limited to, read operations, write operations, transfer operations, and/or other operations performed with respect to data. Depending on the requested operation, the NIC accesses (e.g., or another computing device utilizes the NIC to access) one of the rings to determine an address of a memory region data is to be written to, read from, and/or the like. For instance, if a write request is received, the NIC accesses the first ring to determine an address of an empty memory region that data is to be written to. The NIC causes data to be written to the address, updates the second ring to comprise a pointer to the memory region since the memory region is now full, and updates the first ring to no longer include the pointer to the memory region (i.e., since the region is no longer empty). If a read request is received, the NIC accesses the second ring to determine an address of a memory region storing data. The NIC causes data to be read from the memory region. In a data transfer embodiment where the computing device is an intermediary between computing devices, the NIC causes the data to be deleted from the memory region, updates the first ring to comprise a pointer to the memory region since it is now empty, and updates the second ring to no longer comprise the pointer to the memory region (i.e., since the region is no longer full). By utilizing a ring data-structure in facilitating data operations, the ring data-structure provides an endpoint for data exchange and synchronization that applications and/or devices can access utilizing application programming interface (API) calls. This allows a computing device to leverage the ring data-structure while supporting various communication protocols that can interface with the API (e.g., RDMA protocol, transmission control protocol (TCP) communication protocol, Internet protocol (IP) communication protocol, and/or the like). This flexibility allows a nodes that support different communication protocols to read from and/or write to the computing device.

In some aspects, the NIC is an RDMA NIC and the data operation is an RDMA operation. By utilizing RDMA in this manner, embodiments described herein allow computing devices to directly access memory of the computing device comprising the ring data-structure (also referred to as a "RDMA-enabled ring data-structure" in RDMA implementations) utilizing remote NICs, thereby allowing for higher throughput of data and lower latency in data transfers. Furthermore, RDMA allows transferring data without requiring the use of a computing device's central processing unit (CPU) (e.g., the processing unit of the computing device comprising the ring data-structure), thereby reducing compute resources. Furthermore, as mentioned above, the ring data-structure provides an endpoint for API calls, thereby allowing a computing device to incorporate RDMA operations for data transfers while supporting distributed query processing and allowing a device to fall back on other protocols if RDMA is not supported by a node.

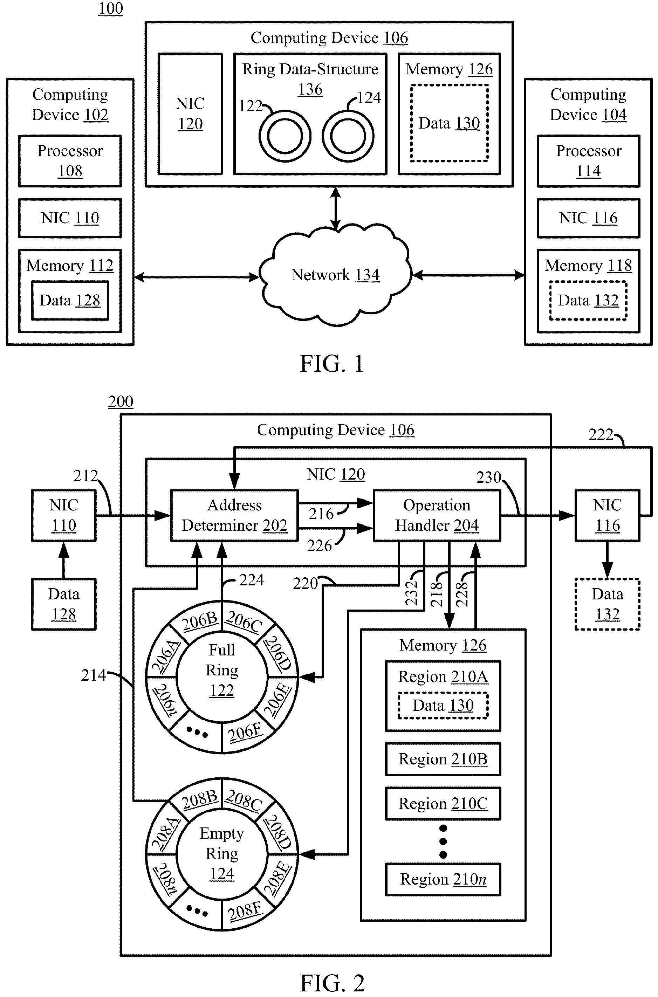

Embodiments are configurable in various ways to provide data operations using a ring data-structure. For example, FIG. 1 shows a block diagram of an example system 100 for transferring data utilizing a ring data-structure, in accordance with an example embodiment. As shown in FIG. 1, system 100 comprises a computing device 102, an computing device 106, and a computing device 104, which are communicatively coupled via a network 134. In examples, network 134 comprises one or more networks such as local area networks (LANs), wide area networks (WANs), enterprise networks, the Internet, etc. In examples, network 144 comprises one or more wired and/or wireless portions. The features of system 100 are described in detail as follows.

Computing device 102 and computing device 104 are each any type of stationary or mobile processing device, including, but not limited to, a desktop computer, a server, a mobile or handheld device (e.g., a tablet, a personal data assistant (PDA), a smart phone, a laptop, etc.), an Internet-of-Things (IoT) device, etc. In accordance with an embodiment, computing devices 102 and 104 are associated with a user (e.g., an individual user, a group of users, an organization, a family user, a customer user, an employee user, a tenant, etc.) or respective (e.g., different) users. As shown in FIG. 1, computing device 102 comprises a processor 108, a NIC 110, and a memory 112 and computing device 104 comprises a processor 114, a NIC 116, and a memory 118. In implementations, computing device 102 and/or computing device 104 comprise additional components not shown in FIG. 1 for illustrative clarity and brevity, e.g., timing controllers, device drivers, additional processing units (e.g., co-processors, accelerator processors, and/or the like), additional memory devices, physical ports, input devices, output devices, and/or the like.

Processors 108 and 114 are configured to perform tasks such as, but not limited to, program execution, signal coding, data processing, input/output processing, power control, and/or other functions. For instance, in embodiments, processor 108 performs a task utilizing NIC 110 to communicate over network 134, a task to access data stored in memory 112, a task to execute an application (not shown in FIG. 1), a task to host a virtual node, a task to process input from an input device (not shown in FIG. 1), a task to display a graphic on a display (not shown in FIG. 1), a task to cause audio to be output by an audio output device, a task to execute and/or utilize an operating system, and/or any other type of task associated with the operation of computing device 102 and/or its components, as described elsewhere herein. Processor 114 performs tasks in a similar manner with respect to computing device 104 and/or its components, as described elsewhere herein.

Memory 112 and memory 118 are any type of memory device or devices that store data and/or computer program instructions/code to be executed by respective computing devices 102 and 104. For instance, as shown in FIG. 1, memory 112 stores data 128. Memory 112 and/or memory 118 include volatile memory (e.g., random access memory (RAM) and/or the like) and/or persistent memory (e.g., hard drives, non-volatile RAM, and/or the like).

NICs 110 and 116 are hardware components configured to facilitate communication between respective computing devices 102 and 104 and other devices (e.g., computing device 106, the other device of computing device 102 and 104, and/or other devices not shown in FIG. 1 for brevity) over a network (e.g., network 134). Examples of a NIC include, but are not limited to, a network interface card, a network adapter (e.g., a LAN adapter, a WAN adapter, etc.), a physical network interface, and/or any other type of controller for facilitation network communications to and from a computing device over a network. In accordance with an embodiment, NICs 110 and 116 are implemented physical separate from respective processors 108 and 114 (e.g., on an expansion card that plugs into a computer bus of a respective computing device, as an integrated circuit chip of a motherboard of a respective computing device, on a daughterboard communicatively coupled to the motherboard of the respective computing device, in a device plugged into a port of a respective computing device (e.g., a universal serial bus (USB) dongle connected to a USB port of the computing device), and/or the like). As shown in FIG. 1, NIC 110 is internal to computing device 102 and NIC 116 is internal to computing device 104. Alternatively, e.g., in a (USB) dongle embodiment, either NICs 110 and NC 116 are external to and communicatively coupled to the respective computing device.

In embodiments described herein, NICs 110 and 116 are used to perform data operations to transfer data between computing devices. For instance, in an embodiment, NICs 110 and 116 utilize RDMA operations to read, write, and/or transfer data. By using RDMA operations, a NIC is able to send or receive data without involving the operating system of the other computing device. This reduces the compute resources (e.g., the CPU (e.g., processor 108 or 114), caches, context switches, etc.) utilized in data transfer operations. Furthermore, data transfers using RDMA operations are able to be performed in parallel with other system operations, reducing latency in data transfer. In embodiments, applications and/or devices are able to utilize API calls of NIC 110 or 116 to send read or write requests, receive data, and/or the like.

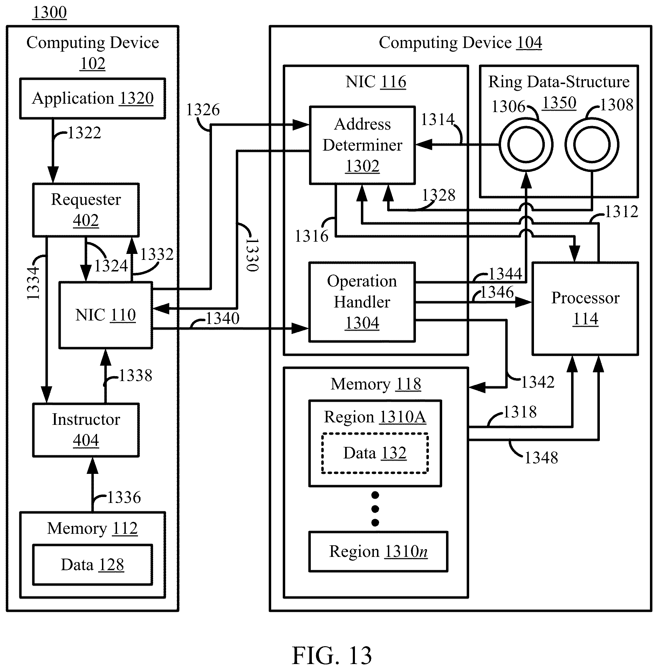

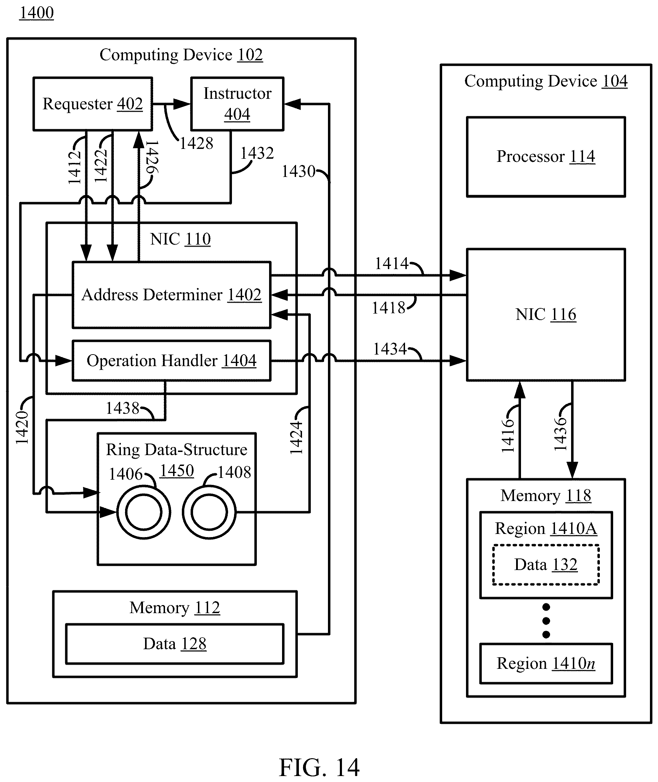

Computing device 106 is configured to facilitate data operations (e.g., RDMA operations, TCP operations, and/or the like) between nodes of system 100. As shown in FIG. 1, computing device 106 is external to computing devices 102 and 104. In this context, computing device 106 is also referred to as a "shuffle node". In an alternative embodiment, one or more components and/or subservices of computing device 106 are implemented as an internal component or subservice of computing device 102 or computing device 104 (e.g., as further described with respect to FIGS. 13 and 14, as well as elsewhere herein). As shown in FIG. 1, computing device 106 comprises a NIC 120, a ring data-structure 136, and a memory 126. NIC 120 operates in a similar manner as NICs 110 and 116 of respective computing devices 102 and 104. In this context, NIC 120 is accessible by nodes of system 100 (e.g., by API calls) to access ring data-structure 136 and/or memory 126.

Memory 126 is any type of memory device or devices that store data and/or computer program instructions/code, as described elsewhere herein. In an embodiment, memory data comprises multiple memory regions (not shown in FIG. 1 for brevity). Memory regions can be divided equally in size or vary in size, depending on the implementation. In an embodiment, data is stored in a memory region or across multiple regions. For example, a data file (e.g., a file comprising multiple bits of data) can be stored across multiple memory regions where the entire data file is too large to store in a single memory region. In accordance with an embodiment, a memory region is the size of a data-chunk. As shown in FIG. 1, memory 126 is integrated into computing device 106. Alternatively, memory 126 is external to computing device 106 and accessible to computing device 106 over a network (e.g., network 134).

Ring data-structure 136 is used to indicate where data is stored in memory 126 and available space of memory 126. As shown in FIG. 1, ring data-structure 136 is separate from memory 126. Alternatively, memory 126 stores some or all of ring data-structure 136. As shown in FIG. 1, ring data-structure 136 comprises a full ring 122 ("ring 122") and an empty ring 124 ("ring 124"). Ring 122 comprises one or more pointers that indicate regions of memory 126 that store data (i.e., are "full"). Ring 124 comprises one or more pointers that indicate regions of memory 126 that are empty (i.e., are available to store data). In embodiments, ring data-structure 136 is an endpoint accessible utilizing an API call. Computing devices, hardware, and/or applications executing on computing devices are able to access ring data-structure 136 (or a ring therein, e.g., ring 122 or ring 124) by placing an API call to ring data-structure 136. API calls received by computing device 106 cause pointers to be written to or read from rings 122 and 124. For instance, a data write API call of a data transfer operation causes a pointer pointing to an empty region of memory 126 to be read from ring 124 and, as part of storing data in the region (e.g., subsequent to, prior to, or simultaneous to), written to ring 122. A data read API call of a data transfer operation causes a pointer pointing to a full region of memory 126 to be read from ring 122 and, as part of removing data from the region (e.g., subsequent to, prior to, or simultaneous to), written to ring 124.

In some embodiments, a data write or data read operation comprises multiple API calls and sub-operations. For instance, in an embodiment, NIC 120 exposes APIs (e.g. ,a read API, a write API, and/or the like). In this context, a remote computing device (e.g., computing device 102 and/or computing device 104) use verbs (e.g., one-sided RDMA verbs) to use the APIs to read and/or write to memory 126 and/or interact with ring data-structure 136. The API causes NIC 120 to perform low-level operation. Examples of a low-level operation include, but are not limited to, an RDMA read operation, an RDMA write operation, an operation to lock a data-structure, an operation to unlock a data-structure, a low-level data transfer operation, an enqueue operation, a dequeue operation, an atomic operation (e.g., an atomic fetch and add operation, an atomic compare and swap operation, and/or the like), and/or another type of operation that NIC 120 is configured to perform based on a verb received from a computing device. For instance, NIC 120 replies to each verb and the remote computing device determines the next verb to execute for the API call. Alternatively (or additionally), an API is provided by the remote computing device (e.g., computing device 102 and/or computing device 104) for accessing NIC 120. In this alternative context, the remote computing device executes multiple low level operations on NIC 120.

As described herein, ring data-structure 136 is utilized in data transfer operations (and/or other data movement operations). For instance, a producer utilizes computing device 106 comprising ring data-structure 136 to transfer data from memory of or accessible to the producer to memory of or accessible to a consumer. In this context, a producer is a device (also referred to as a "producer device") or a service (also referred to as a "producer service") executing on a device that is sending data across a network (e.g., network 134). A consumer is a device (also referred to as a "consumer device") or a service (also referred to as a "consumer service") executing on a device that is receiving data across a network (e.g., network 134). In some embodiments, a device or service can operate as producer or consumer in the same or different sequence of operations. As an example, suppose computing device 102 utilizes computing device 106 to transfer data stored in memory 112 (e.g., data 128) to memory 118 of computing device 104. In this context, computing device 102 is a producer device and computing device 104 is a consumer device.

In embodiments, API calls can be placed to ring data-structure 136 in synchronous, streaming, or asynchronous manners. For instance, in accordance with an embodiment, a consumer is able to place API calls for reading data before a producer has completed writing all of the data. This allows data transfers to begin without requiring full materialization of data, thereby reducing the amount of time spent to complete a full data transfer (e.g., a complete write of data from the producer and a complete read by the consumer). Furthermore, in implementations where data is to be transferred across multiple nodes, a first node writes data to computing device 106 and a second node is able to begin reading data from computing device 106 before the first node is finished writing all of the data. The second node is further able to begin transferring data to a third node (e.g., utilizing another intermediary (e.g., RDMA) device such as computing device 106 or another device of the network-based computing system, not shown in FIG. 1) even if the first node has not finished writing all of the data to be transferred to computing device 106, further reducing the time to (e.g., completely) transfer data across multiple nodes.

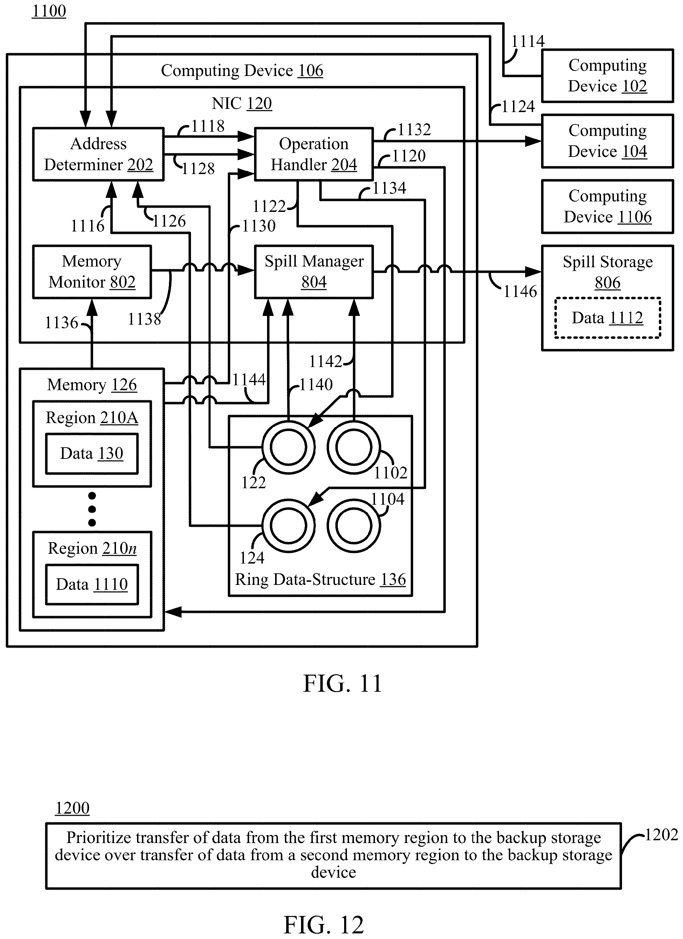

In some implementations, rings 122 and 124 are referred to as a "ring pair." In an embodiment a ring pair is associated with an entity. Examples of entities include, but are not limited to, pairs of nodes, a user account of a network-based computing system having multiple nodes associated therewith, a tenant account of a network-based computing system having multiple nodes associated therewith, a pair of user accounts, and/or the like. For instance, suppose rings 122 and 124 are associated with a node pair entity where computing device 102 is a first node of the node pair and computing device 104 is a second node of the node pair. In this context, rings 122 and 124 are utilized for data transfer operations between nodes of the node pair. In another example, rings 122 and 124 are associated with a user account entity where computing devices 102 and 104 are nodes associated with the user account. In this example, rings 122 and 124 are utilized for data transfer operations between (e.g., any) nodes of the user account entity. For instance, suppose computing device 102 hosts a first virtual node of the user account entity (not shown in FIG. 1 for brevity) and computing device 104 hosts a second virtual node of the user account entity (not shown in FIG. 1 for brevity). In this further example, rings 122 and 124 are utilized for data transfer operations between the virtual nodes of the user account entity (e.g., but not for data transfer operations between virtual nodes of other (i.e., different) user account entities hosted by computing device 102 and/or 104). In some embodiments, ring data-structure 136 comprises multiple ring pairs. Further details regarding ring data-structures comprising multiple ring pairs are described with respect to FIGS. 11 and 12, as well as elsewhere herein.

In an embodiment, ring data-structure 136 supports concurrent access by multiple producer(s) and/or consumer(s). For instance, in an embodiment both the producer and consumer of a data transfer are able to simultaneously access ring data-structure 136 (or a ring therein). This lock-free access enables bulk enqueue/dequeue operations, thereby increasing throughput capabilities of systems utilizing ring data-structure 136. Furthermore, a consumer is able to pre-fetch data (e.g., move the data to a cache of a consumer device, move the data to a cache accessible to a consumer device or service, and/or the like) with reduced or no impact on producers and other consumers accessing ring data-structure 136. Also, since multiple consumers and producers are able to access ring data-structure 136 simultaneously, ring data-structure 136 is able to improve the efficiency of all-to-all communications (e.g., where multiple nodes are transmitting data to each other).

In some embodiments, computing device 106 comprises a processor (e.g., a CPU), not shown in FIG. 1 for brevity. Such a processor operates in a similar manner to processors 108 and 114 to perform tasks such as, but not limited to, program execution, signal coding, data processing, input/output processing, power control, and/or other functions. For instance, in an embodiment the processor performs tasks related to TCP/IP communication (e.g., datalink layer tasks, internet layer tasks, transport layer tasks, application layer tasks, and/or the like), related to two-sided RDMA communication (e.g., managing a queue (e.g., a send queue, a receive queue, a completion queue, etc.), sending or receiving data, and/or the like), and/or related to other communication protocols. Alternatively, computing device 106 does not comprise a central processor or otherwise enables communication without requiring the use of a central processor of computing device 106. In this alternative, producers and consumers utilize one-sided RDMA communication techniques with NIC 120 to write and read data from memory 126. By enabling one-sided RDMA in this manner, such embodiments provide data transfer techniques that consume fewer compute resources and, in some situations, provide a less complex circuit for an intermediary device (e.g., an intermediary device without a central processor).

Embodiments of computing device 106 are configurable in various ways to facilitate data operations between a producer and a consumer. For example, FIG. 2 shows a block diagram of an example system 200 comprising computing device 106 of FIG. 1, in accordance with an example embodiment. As shown in FIG. 2, system 200 comprises NIC 110, NIC 116, and computing device 106 (comprising NIC 120, ring 122, ring 124, and memory 126), as described with respect to FIG. 1. As also shown in FIG. 2, NIC 120 comprises an address determiner 202 and an operation handler 204, each of which are implemented as subcomponents and/or services thereof. Memory 126 comprises a region 210A, a region 210B, a region 210C, and region 210*n* (collectively referred to as "regions *210A-210n").* As described herein, rings 122 and ring 124 comprise one or more pointers that indicate respective addresses of regions 210A-210n. For example, as shown in FIG. 2, ring 122 comprises pointers 206A, 206B, 206C, 206D, 206E, 206F, and 206n (collectively referred to as "pointers 206A-206n") and ring 124 comprises pointers 208A, 208B, 208C, 208D, 208E, 208F, and 208n (collectively referred to as "pointers 208A-208n"). Pointers *206A-206n* indicate addresses of regions of regions 210A-210n that store data (also referred to as "full regions" herein) and pointers 208A-208n indicate addresses of regions of regions 210A-210n that are available for storing data (also referred to as "empty regions" herein).

As described herein, NIC 120 comprises address determiner 202 and operation handler 204. Depending on the implementation, address determiner 202 and/or operation handler 204 comprise logic and/or primitive logic. For instance, in accordance with an embodiment that utilizes one-sided RDMA operation, address determiner 202 and operation handler 204 are "primitive" components that execute low-level operations (e.g., a read operation based on a read verb, a write operation based on a write verb, an atomic operation, and/or the like). In this context, NIC 120 reads from and writes to ring 122, ring 124, and/or memory 126 with fewer compute resource expenditure than two-sided RDMA operations or TCP/IP operations. In accordance with another embodiment, address determiner 202 and/or operation handler 204 comprise logic executable by a processor to perform other types of operations for use in two-sided RDMA communication, TCP/IP communication, and/or another type of communication protocol. In a further embodiment, address determiner 202 and operation handler 204 support low-level operations (e.g., for one-sided RDMA protocol) as well as other operations for other types of protocols. In this context, NIC 120 is able to support RDMA operations (which consume a relatively fewer amount of compute resources) as well as other communication protocols, thereby increasing the flexibility and compatibility of the system in interfacing with different types of producers and consumers.

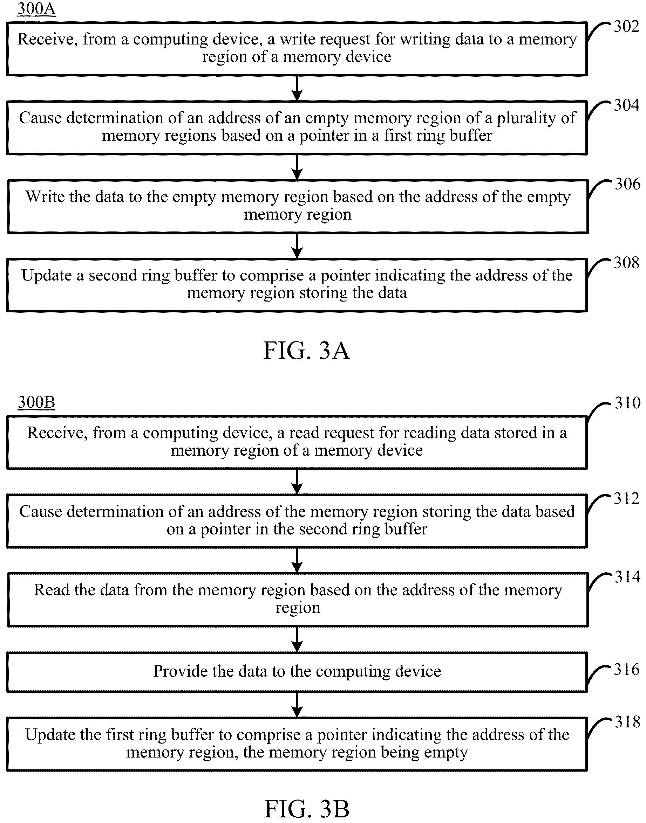

To better understand the operation of computing device 106 with respect to FIG. 2, FIG. 2 is further described with respect to FIGS. 3A and 3B. FIG. 3A shows a flowchart 300A of a process for writing data utilizing a computing device with a ring data-structure, in accordance with an example embodiment. FIG. 3B shows a flowchart 300B of a process for reading data utilizing a computing device with a ring data-structure, in accordance with an example embodiment. In an embodiment, computing device 106 of FIG. 2 operates according to the steps of flowchart 300A and/or flowchart 300B. Note that not all steps of flowcharts 300A and/or 300B need be performed in all embodiments. Further structural and operational embodiments will be apparent to persons skilled in the relevant art(s) based on the following description of FIGS. 2-3B.

Flowchart 300A begins with step 302. In step 302, a write request for writing data to a memory region of a memory device is received from a computing device. For example, address determiner 202 of FIG. 2 receives a write request 212 for writing data 128 to a memory region of regions 210A-210n. In accordance with an embodiment, write request 212 is received as an API call of NIC 120. In an embodiment, write request 212 is a write portion of a data transfer operation. In this context, write request 212 comprises an indication of an intended target of the data transfer operation (e.g., the consumer that is expected to read the data to be written to the memory region). For instance, suppose computing device 104 is the intended target of the data transfer operation. In this example, write request 212 comprises an identifier of computing device 104 and/or a component thereof (e.g., NIC 116). In an embodiment, write request 212 comprises data 128. Alternatively, write request 212 comprises an address of computing device 102 where data 128 is stored. In another alternative, data 128 is otherwise received separate from write request 212 (e.g., as a separate subsequent transmission, responsive to NIC 120 acknowledging receipt of write request 212, and/or the like).

In step 304, an address of an empty memory region of a plurality of memory regions is determined based on a first pointer in a first ring buffer. For example, address determiner 202 of FIG. 2 receives one or more empty pointer(s) 214 ("empty pointer 214" herein) from ring 124. Empty pointer 214 comprises one or more of pointers 208A-208n. Each pointer of empty pointer 214 indicates an address of a region of regions *210A-210n* that is empty (or otherwise available to have data written thereto). The address(es) uniquely identify a specific location in memory 126 of the corresponding region. In an example, each address indicated in a pointer is a fixed-length sequence of digits. Examples of an address include, but are not limited to, is a logical addresses, linear addresses, physical addresses, and/or the like. Depending on the implementation, empty pointer 214 is the first pointer of pointers 208A-208n in a sequence of pointers (e.g., pointer 208A), a subset of pointers 208A-208n, all of pointers 208A-208n, and/or the like. In an embodiment, empty pointer 214 comprises a number of pointers that point to a region or number of regions large enough to store data to be written in response to write request 212. For example, suppose write request 212 is a request to write a chunk of data (e.g., 256 KB in a non-limiting example) and each region of regions *210A-210n* is the size of a chunk. In this example, empty pointer 214 comprises pointer 208A indicating an address of region 210A (which, in this example, is empty). In an embodiment, address determiner 202 accesses ring 124 to obtain empty pointer 214. In a further example, and as further discussed with respect to FIG. 11, as well as elsewhere herein, address determiner 202 accesses ring 124 based on an identifier of a target consumer (e.g., computing device 104) included in write request 212 matching an identifier of a target consumer associated with the ring pair comprising ring 124. As shown in FIG. 2, address determiner 202 provides the address(es) indicated by empty pointer 214 to operation handler 204 as address(es) 216 ("address 216" herein).

In step 306, the data is written to the empty memory region based on the address of the empty memory region. For example, operation handler 204 of FIG. 2 writes data 128 corresponding to write request 212 to an empty memory region of memory 126 based on address 216. For instance, in the non-limiting example described with respect to step 304, suppose address 216 is an address of region 210A. In this example, operation handler 204 writes data 128 to region 210A as data 130 via write operation 218.

In step 308, a second ring buffer is updated to comprise a second pointer indicating the address of the memory region storing the data. For example, operation handler 204 updates ring 122 via update signal 220 to comprise a pointer indicating the address of region 210A storing data 130. For instance, suppose full ring 122 comprises pointers 206A-206n-1 (where pointer *206n-1* is not shown in FIG. 2 for brevity). In this example, update signal 220 causes pointer *206n* to be enqueued to (or otherwise included in) ring 122, where pointer *206n* indicates the address of region 210A. In an embodiment, pointer 206n is an empty or blank pointer located in ring 122 that is updated by update signal 220 to indicate the address of region 210A. In an embodiment, operation handler 204 updates ring 122 by transferring the pointer that indicated the address of region 210A in ring 124 (e.g., pointer 208A) to ring 122 as pointer 206n. In another embodiment, operation handler 204 updates ring 122 by removing pointer 208A from ring 124 (e.g., as part of a dequeuing operation) and enqueueing pointer 206n to ring 122 (e.g., as part of an enqueuing operation).

As described above, flowchart 300B is a process for reading data utilizing a computing device with a ring data-structure. Flowchart 300B begins with step 310. In step 310, a read request for reading data stored in a memory region of a memory device is received from a computing device. For example, address determiner 202 of FIG. 2 receives read request 222 from NIC 116. Read request 222 is a request for reading data stored in a memory region of memory 126. In an embodiment, read request 222 indicates the memory region that data is to be read from. Alternatively, read request 222 is a request to read data associated with a particular consumer. In this context, read request 222 comprises an identifier that uniquely identifies the consumer (e.g., an identifier of a user account associated with a consumer device or consumer service, an identifier of a consumer device, an identifier of a consumer service, and/or the like).

In step 312, an address of the memory region storing the data is determined based on a pointer in the second ring buffer. For example, address determiner 202 receives one or more full pointer(s) 224 ("full pointer 224" herein) from ring 122. Full pointer 224 comprises one or more of pointers 206A-206n. Each pointer of full pointer 224 indicates an address of a region of regions 210A-210n that is storing data. Addresses are indicated by a full pointer in a similar manner as described with respect to addresses indicated by an empty pointer, as described with respect to step 304 of flowchart 300A. In an implementation where read request 222 comprises an identifier that uniquely identifies a consumer, each pointer of full pointer 224 is associated with that identifier/consumer. For instance, with respect to the non-limiting example described with respect to flowchart 300A, suppose pointer 206n is associated with (e.g., stored with) an identifier that identifies the target consumer (e.g., computing device 104) and read request 222 comprises an identifier of the same target consumer. In this context, address determiner 202 obtains pointer *206n* as full pointer 224 based on the matching identifiers. Depending on the implementation, full pointer 224 is the first pointer of pointers 206A-206n in a sequence of pointers (e.g., pointer 206A), a subset of pointers 206A-206n, all of pointers 206A-206n, and/or the like. In an embodiment, address determiner 202 accesses ring 122 to obtain full pointer 224. In a further example, and as further described with respect to FIG. 11, as well as elsewhere herein, address determiner 202 accesses ring 122 based on an identifier of the consumer read request 222 is associated with (e.g., the consumer that is identified by an identifier included in read request 222). As shown in FIG. 2, address determiner 202 provides the address(es) indicated by full pointer 224 to operation handler 204 as address(es) 226 ("address 226" herein).

In step 314, the data is read from the memory region based on the address of the memory region. For example, operation handler 204 of FIG. 2 reads data from the memory region of memory 126 based on address 226. For instance, in the non-limiting example described with respect to step 312 and flowchart 300A, suppose address 226 is the address of region 210A, as indicated by pointer 206n. In this example, operation handler 204 reads data 130 from region 210A via read operation 228.

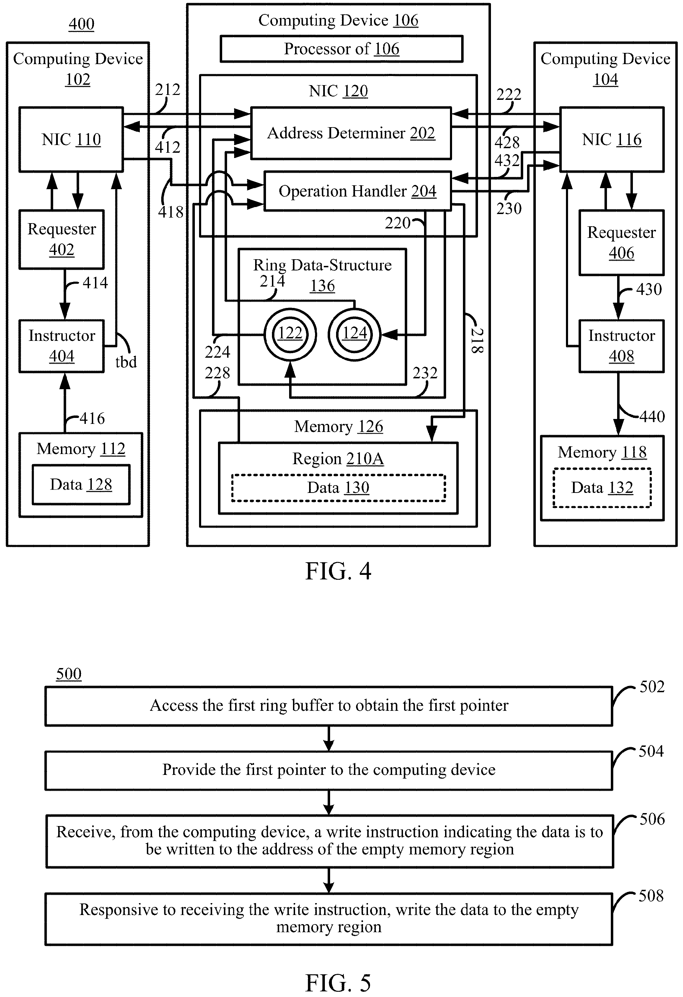

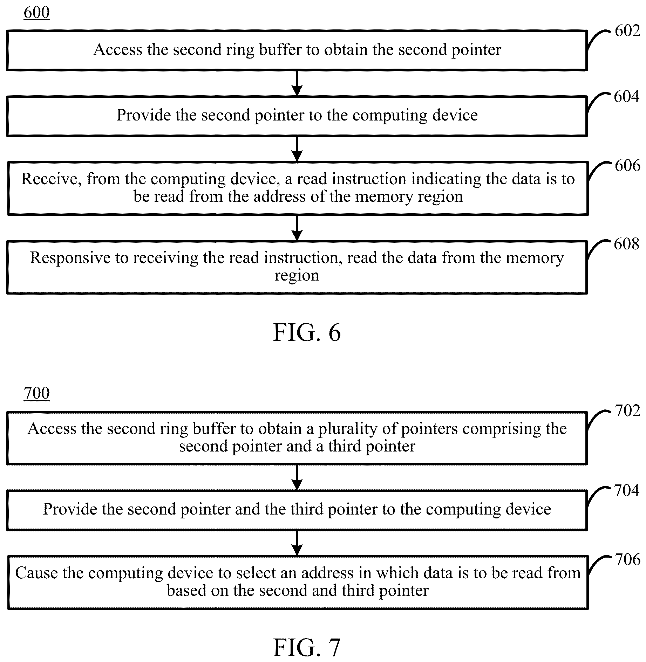

In step 316, the data is provided to the computing device. For example, operation handler 204 of FIG. 2 provides data 130 to NIC 116 in a response 230. In this context, response 230 is a response to read request 222 (or a subsequent request or instruction associated therewith, e.g., as further described with respect to FIGS. 4 and 6, as well as elsewhere herein). Response 230 causes NIC 116 to store data 130 in memory of computing device 104 (e.g., memory 118) as data 132.

In step 318, the first ring buffer is updated to comprise a pointer indicating the address of the memory region, the memory region being empty. For example, suppose data 130 is erased from region 210A as part of being transferred to the consumer. In this context, and as shown in FIG. 2, operation handler 204 updates ring 124 via update signal 232 to comprise a pointer indicating the address of region 210A, region 210A now being empty. In this example, update signal 232 causes a pointer to be enqueued to (or otherwise included in) ring 124, where the pointer indicates the address of region 210A. For instance, supposes update signal 232 causes pointer 208A to be enqueued to ring 124, as the pointer was previously removed (e.g., dequeued) in step 308 of flowchart 300A. In this example, pointer 208A (again) indicates the address of region 210A. Alternatively, update signal 232 causes a different pointer to be enqueued to ring 124 (e.g., a random pointer in the ring of pointers, an additional pointer inserted at the end of a sequence of pointers of the ring, etc.). In an embodiment, the pointer is a blank or empty pointer in ring 124 that is updated by update signal 232 to indicate the address of region 210A. In an embodiment, operation handler 204 updates ring 124 by transferring the pointer that indicated the address of region 210A in ring 122 (e.g., pointer 206n) to ring 124 (e.g., as pointer 208A). In another embodiment, operation handler 204 updates ring 124 by removing pointer 206n from ring 122 and enqueuing a pointer (e.g., pointer 208A) to ring 124.

### III. Example Embodiments of One-Sided RDMA Transfer Using a Ring Data-Structure

As described herein, embodiments of the present disclosure can be implemented in a variety of data operation scenarios. For example, in some embodiments, RDMA using ring data-structures is implemented using one-sided RDMA techniques. In this context, computing device 106 of FIG. 1 is able to provide storage for use in data transfers without requiring a CPU, thereby reducing the complexity of the circuit of computing device 106 and/or reducing the compute resources expended by computing device 106 (e.g., in idle operation or when utilized by a producer or consumer). In this context, a node (e.g., a remote node) is able to directly read from or write to computing device 106 without the target (i.e., computing device 106) having a central processor. Alternatively, if computing device 106 has a central processor, a node is able to read from or write to computing device 106 without computing device 106 having to utilize its central processor for the read or write operation. In this context, compute resources are saved and/or the central processor of computing device 106 is able to perform other tasks in parallel to the remote node's read and/or write operation.

Embodiments of systems utilizing ring data-structures and one-sided RDMA operations can be configured in various ways. For example, FIG. 4 shows a block diagram of a system 400 for transferring data utilizing a ring data-structure and RDMA, in accordance with an example embodiment. As shown in FIG. 4, system 400 comprises computing device 102 (comprising NIC 110 and memory 112), computing device 104 (comprising NIC 116 and memory 118), and computing device 106 (comprising NIC 120 (comprising address determiner 202 and operation handler 204), ring data-structure 136 (comprising rings 122 and 124), and memory 126 (comprising region 210A)), as described with respect to FIGS. 1 and 2. As also shown in FIG. 4, computing device 102 also comprises a requester 402 and an instructor 404 and computing device 104 also comprises a requester 406 and instructor 408. In accordance with an embodiment, requester 402, instructor 404, requester 406, and instructor 408 are implemented as subcomponents of and/or subservices executed thereby respective computing devices. For instance, in accordance with an embodiment, requester 402 and instructor 404 are subservices of an application executing on computing device 102 to transfer data from computing device 102 to computing device 104 and requester 406 and instructor 408 are subservices of an application executing on computing device 102 to receive data from producers. While requester 402 is illustrated as separate from instructor 404 and requester 406 is illustrated as separate from instructor 408 in FIG. 4, it is contemplated herein that some embodiments implement a requester and instructor as the same component, device, and/or service. For instance, in accordance with an embodiment, requester 406 and instructor 408 are integrated in an application that retrieves data to be transferred to computing device 104 from remote intermediary devices (e.g., computing device 106).

To better understand the operation of NIC 120 with respect to FIG. 4, FIG. 4 is further described with respect to FIGS. 5 and 6. FIG. 5 shows a flowchart 500 of a process for writing data utilizing a remote direct memory access device with a ring data-structure, in accordance with an example embodiment. FIG. 6 shows a flowchart 600 of a process for reading data utilizing a remote direct memory access device with a ring data-structure, in accordance with an example embodiment. In an embodiment, NIC 120 of FIG. 4 operates according to the steps of flowchart 500 and/or flowchart 600. Note that not all steps of flowcharts 500 and/or 600 need be performed in all embodiments. Further structural and operational embodiments will be apparent to persons skilled in the relevant art(s) based on the following descriptions of FIGS. 4-6.

Flowchart 500 begins with step 502, which is a further example of step 304 of flowchart 300A in an embodiment. In step 502, the first ring buffer is accessed to obtain the first pointer. For example, address determiner 202 of FIG. 4 accesses ring 124 to obtain empty pointer 214, e.g., in a similar manner as described with respect to FIGS. 2 and 3A. As shown in FIG. 2, address determiner 202 accesses ring 124 subsequent to receiving write request 212. In an embodiment, address determiner 202 accesses ring 124 utilizing a dequeue operation to obtain empty pointer 214. In an embodiment, the dequeue operation is perceived as an atomic operation by nodes as empty pointer 214 is made accessible to the node write request 212 corresponds to (e.g., computing device 102, a virtual node executing thereon, or a component node thereof) and not other nodes. In this context, ring data-structure 136 reduces data-races and concurrency issues by preventing multiple nodes from accessing the same pointer at the same time. In this context, write request 212 specifies the location of ring 124 that address determiner 202 is to obtain empty pointer 214 from.

In step 504, the first pointer is provided to the computing device. For example, address determiner 202 of FIG. 4 provides pointer 214 to requester 402 as response 412. Alternatively, address determiner 202 provides the address indicated by empty pointer 214 to requester 402 as response 412. As shown in FIG. 2, requester 402 provides information 414 to instructor 404, where information 414 comprises the address indicated by empty pointer 214. Instructor 404 obtains data 128 via access 416 and generates write instructions 418, where write instructions comprise instructions to write data 128 to the address indicated by empty pointer 214. In an embodiment where instructor 404 receives multiple addresses, it selects which of the address or addresses data 128 is to be written to. In an embodiment, instructor 404 selects the address randomly or pseudo-randomly. In a non-limiting example described with respect to FIG. 4, write instructions 418 indicate data 128 is to be written to region 210A of memory 126.

In step 506, a write instruction indicating the data is to be written to the address of the empty memory region is received from the computing device. For example, operation handler 204 of FIG. 4 receives write instructions 418 form instructor 404. As stated above, write instructions 418 indicate data 128 is to be written to an address of an empty region (e.g., region 210A) of memory 126. In an embodiment, write instructions 418 comprise the address of the empty region (e.g., region 210A).

Flowchart 500 continues to step 508, which is a further example of step 306 of flowchart 300A in an embodiment. In step 508, responsive to receiving the write instruction, the data is written to the empty memory region. For example, responsive to receiving write instruction 418, operation handler 204 of FIG. 4 writes data 128 to region 210A as data 130 via write operation 218. In an embodiment, write operation 218 is perceived as an atomic operation. For instance, in an implementation ring data-structure 136 ensures the pointer to region 210A is (e.g., only) owned (or otherwise associated with) a single node at a time (e.g., a node is not able to access the pointer while another node is utilizing the pointer to write data to or read data from region 210A). This prevents data-races, thereby improving the flow of data transfer operations and reducing concurrency issues. In an embodiment, subsequent to, concurrent to, or otherwise in association with writing data to region 210A, operation handler 204 updates ring 122 to include a pointer to region 210A, e.g., as described with respect to step 308 of flowchart 300A. In an embodiment, operation handler 204 updates ring 122 to include the pointer to region 210A utilizing an enqueue operation. In further embodiment, the enqueue operation is perceived as an atomic operation.

As stated above, flowchart 600 shows a process for reading data utilizing a remote direct memory access device with a ring data-structure, in accordance with an example embodiment. Flowchart 600 begins with step 602, which is a further example of step 312 of flowchart 300B in an embodiment. In step 602, the second ring buffer is accessed to obtain the second pointer. For example, address determiner 202 of FIG. 4 accesses ring 124 to obtain full pointer 224, e.g., in a similar manner as described with respect to FIGS. 2 and 3B. As shown in FIG. 2, address determiner 202 accesses ring 124 subsequent to receiving read request 222. In an embodiment, address determiner 202 accesses ring 124 utilizing a dequeue operation to obtain full pointer 224. In this context, read request 222 specifies the location of ring 122 that address determiner 202 is to obtain full pointer 224 from. In a further embodiment, read request 222 specifies an identifier of the consumer associated with read request 222 (e.g., computing device 104, a component thereof, an application executing thereon, and/or the like).

In step 604, the second pointer is provided to the computing device. For example, address determiner 202 of FIG. 4 provides full pointer 224 to requester 406 as a response 428. Alternatively, address determiner 202 provides the address indicated by full pointer 224 to requester 406 as response 428. As shown in FIG. 2, requester 406 provides information 430 to instructor 408, where information 430 comprises the address indicated by full pointer 224. Instructor 408 generates read instructions 432, where read instructions comprise instructions to read data from the address indicated by full pointer 224. In an embodiment where instructor 408 receives multiple addresses, it selects which of the address or addresses data is to be read from. In an embodiment, instructor 408 selects the address randomly, pseudo-randomly, based on a timestamp in which data (e.g., in a stream or group of data) was written to a region or regions, based on a sequence identifier that indicates where a particular chunk of data is in a sequence of data, and/or the like. In a non-limiting example described with respect to FIG. 4, read instructions 432 indicate data 130 is to be read from region 210A of memory 126.

In step 606, a read instruction indicating the data is to be read from the address of the memory region is received from the computing device. For example, operation handler 204 of FIG. 4 receives read instructions 432 from instructor 408. As sated above, read instructions 432 indicate data 130 is to be read from an address of region 210A of memory 126. In an embodiment, read instructions 432 comprise the address of region 210A.

Flowchart 600 continues to step 608, which is a further example of step 314 of flowchart 300B in an embodiment. In step 608, responsive to receiving the read instruction, the data is read from the memory region. For example, responsive to receiving read instructions 432, operation handler 204 of FIG. 4 reads data 130 from region 210A via read operation 228. In an embodiment, read operation 228 is perceived as an atomic operation. Operation handler 204 provides data 130 to instructor 408 via a response 230, e.g., as described with respect to step 316 of flowchart 300B. In the context of flowchart 500 and 600, data 128 has been transferred from computing device 102 to computing device 104 utilizing RDMA operations in a manner that allows for higher throughput of data with reduced bottlenecks on the processors of either the producer or consumer devices. In an embodiment, subsequent to, concurrent to, or otherwise in associate with reading data 130 from region 210A and/or providing data 130 to instructor 408, operation handler 204 updates ring 124 to include a pointer to region 210A, e.g., as described with respect to step 318 of flowchart 300B. In an embodiment, operation handler 204 updates ring 124 to include the pointer to region 210A utilizing an enqueue operation. In an embodiment, the enqueue operation is perceived as an atomic operation.

In some embodiments, multiple regions of memory 126 store data to be transferred to a consumer. In some implementations a read request (e.g., read request 222) requests addresses where (e.g., all or multiple) pieces (e.g., chunks) of data are stored in memory 126. In this context, address determiner 202 can obtain multiple pointers in ring 122 (e.g., if there are multiple regions of memory 126 storing data to be transferred to computing device 104). NIC 120 operates in various ways to facilitate reading data utilizing a ring data-structure if multiple regions store data to be transferred to a consumer, in embodiments. For example, FIG. 7 shows a flowchart 700 of a process for reading data utilizing an RDMA device with a ring data-structure, in accordance with an example embodiment. In an embodiment, NIC 120 of FIG. 4 operates in accordance with one or more steps of flowchart 700. Note that not all steps of flowchart 700 need be performed in all embodiments. Further structural and operational embodiments will be apparent to persons skilled in the relevant art(s) based on the following description of FIG. 7 with respect to FIG. 4.

Flowchart 700 begins with step 702, which is a further example of step 602 of flowchart 600. In step 702, the second ring buffer is accessed to obtain a plurality of pointers comprising the second pointer and a third pointer. For example, address determiner 202 of FIG. 4 accesses ring 122 to obtain a plurality of pointers (e.g., full pointer 224) comprising a second pointer and a third pointer. For instance, suppose region 210A and at least one more additional region of memory 126 (not shown in FIG. 4 for brevity) (e.g., any of regions 210B-210n as described with respect to FIG. 2) store data to be transferred to computing device 104. In this context, address determiner 202 accesses ring 122 to obtain the pointer indicating an address of region 210A and one or more pointers indicating respective address(es) of other regions of memory 126 storing data to be transferred to computing device 104. In an embodiment, address determiner 202 obtains the pointers based on an identifier of the consumer (e.g., an identifier of computing device 104, an application executing thereon, and/or a user account associated therewith) included in read request 222. In this context, full pointer 224 comprises the multiple pointers. In an embodiment, address determiner 202 accesses ring 124 utilizing a dequeue operation (or multiple dequeue operations) to obtain the multiple pointers.

Flowchart 700 continues to step 704, which is a further example of step 604 of flowchart 600. In step 704, the second pointer and the third pointer are provided to the computing device. For example, address determiner 202 of FIG. 4 provides full pointer 224 (comprising the multiple pointers) to requester 406 as response 428, e.g., as described with respect to step 604 of flowchart 600. Alternatively, address determiner 202 provides the addresses indicated by pointers of full pointer 224 to requester 406 as response 428.

In step 706, the computing device is caused to select an address in which data is to be read from based on the second and third pointer. For example, computing device 104 of FIG. 4 is caused to select an address in which data is to be read from based on one or more of the pointers or addresses included in response 428. For instance, as shown in FIG. 4, requester 406 provides information 430 to requester 406 to instructor 408. In this context, information 430 includes the addresses indicated by the pointers of full pointer 224. Instructor 408 selects one of the addresses and generates read instructions 432 to read data from the region located at the selected address. Depending on the implementation, instructor 408 selects the address randomly, pseudo-randomly, based on an order in a list of addresses, based on an order of the corresponding pointer in a group of pointers, based on a sequence identifier of the data indicating an order in which the data is located in a sequence of data (e.g., the order the data is in in a stream of data), and/or the like. As described elsewhere herein, instructor 408 provides read instructions 432 to operation handler 204 and flow continues to step 608 of flowchart 600 of FIG. 6. In a further embodiment, instructor 408 generates a further read instruction (e.g., subsequent to transmitting read instruction 432 to operation handler 204, subsequent to receiving response 230, at the same time as read instruction 432, and/or the like) that indicates another address of a region of memory 126 that further data is to be read from.

### IV. Example Spill Storage Embodiments Using a Ring Data-Structure

In embodiments, a device comprising a ring data-structure or a memory region a pointer of a ring data-structure points to can have limited storage capacity. For instance, the storage capacity of memory region 126 of computing device 106 of FIG. 1 can be limited based on a physical size of computing device 106, a location of computing device 106 (e.g., if computing device 106 is collocated or incorporated into a producer or consumer device), design or cost restraints of a type of memory utilized for memory 126 to reduce time to read or write data to memory 126, and/or another reason for which storage capacity of memory of computing device 106 would be limited. In this scenario, if a producer is able to write data to computing device 106 faster than the target consumer is able to read data from computing device 106, the storage capacity of memory region 126 could reach its limit. If this limit is reached, the producer (e.g., computing device 102) experiences a bottleneck in data transfer operations to the target consumer (e.g., computing device 104). Some implementations of computing devices and/or their associated systems operate in a way to and/or are configured to avoid or otherwise mitigate this bottleneck in data transfer. For example, an example embodiment of computing device 106 has access to a spill storage (also referred to as an "overflow storage" herein). Computing device 106, in embodiments, (e.g., selectively) transfers data to the spill storage to prevent the storage capacity of memory 126 reaching its full capacity limit. Furthermore, in some embodiments, computing device 106 leverages the spill storage without either the producer or consumer being impacted by the use of the spill storage, thereby reducing or preventing bottlenecks in data transfer operations utilizing computing device 106.

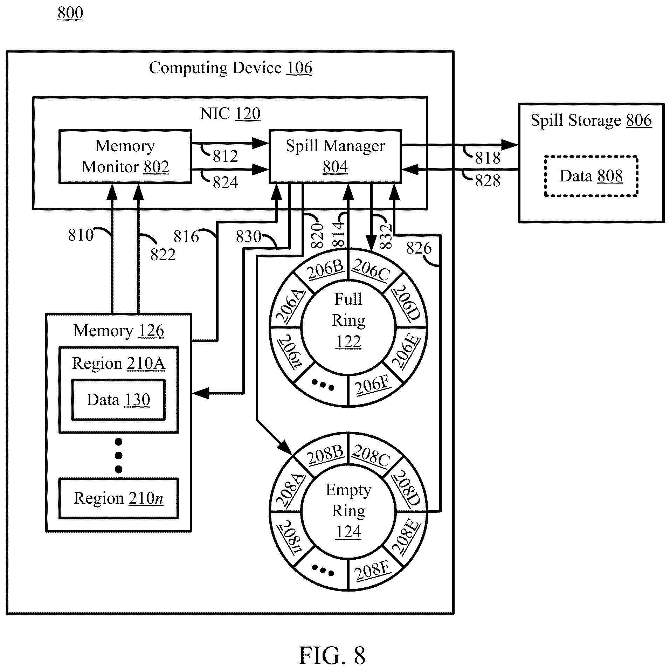

Computing devices that utilize a spill storage to prevent or reduce bottlenecks in data transfer operations are configurable in various way, in embodiments. For example, FIG. 8 shows a block diagram of a system 800 for transferring data to and from a spill storage, in accordance with an example embodiment. As shown in FIG. 8, system 800 comprises computing device 106 (comprising NIC 120, ring 122 (comprising pointers 206A-206n), ring 124 (comprising pointers 208A-208n), and memory 126 (comprising regions 210A-210n) and a spill storage 806. Spill storage 806 is an additional storage device external to computing device 106. In an embodiment, spill storage 806 comprises one or more nonvolatile memory express (NVMe) solid-state drives (SSDs). In some embodiments, spill storage 806 comprises a plurality of storage nodes (e.g., storage devices) where backed up data can be spread across the storage nodes, thereby reducing impact of incast (where many producers are simultaneously transferring data to the same consumer). Furthermore, by distributing data across the storage nodes, systems transferring data to nodes are able to reduce data skew. In an embodiment, spill storage 806 has a storage capacity larger than the storage capacity of memory 126 (e.g., by one or more orders of magnitude (e.g., 2^{x}, 10^{x}, and/or the like, where x is the order) and/or otherwise larger than the storage capacity of memory 126).

As also shown in FIG. 8, NIC 120 comprises a memory monitor 802 and a spill manager 804, each of which are implemented as subcomponents and/or subservices of NIC 120. NIC 120 also comprises other subcomponents and/or subservices (e.g., address determiner 202, operation handler 204, etc.) not shown in FIG. 8 for brevity. While memory monitor 802 and spill manager 804 are shown as subcomponents or subservices of NIC 120, in an alternative embodiment memory monitor 802 and spill manager 804 are implemented external to NIC 120 and/or computing device 106, e.g., in an "overflow" device. In this context, the complexity of the circuit(s) of NIC 120 and/or computing device 106 can be reduced.

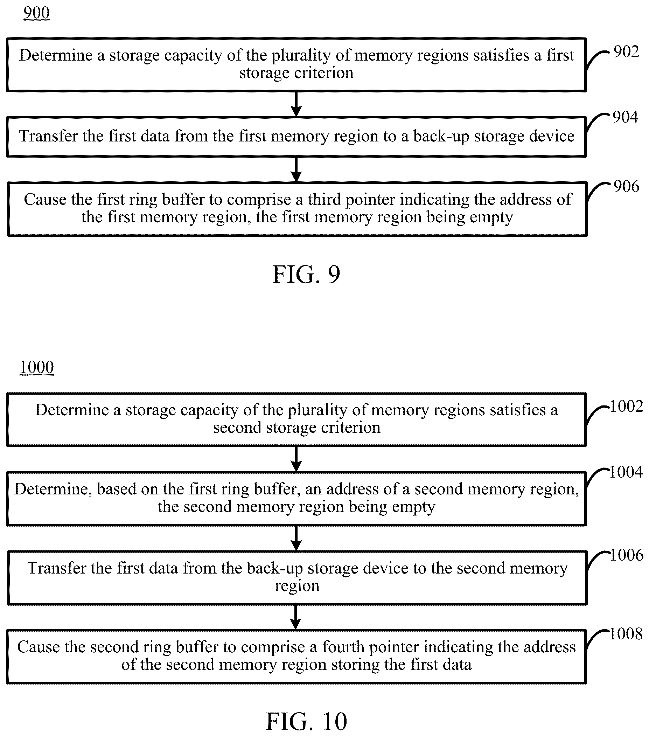

To better understand the operation of memory monitor 802 and spill manager 804, FIG. 8 is described with respect to FIGS. 9 and 10. FIG. 9 shows a flowchart 900 of a process for storing data in a spill storage, in accordance with an example embodiment. FIG. 10 shows a flowchart 1000 of a process for accessing data in a spill storage, in accordance with an example embodiment. In an embodiment, NIC 120 of FIG. 8 operates according to the steps of flowchart 900 and/or flowchart 1000. Note that not all steps of flowcharts 900 and/or 1000 need be performed in all embodiments. Further structural and operational embodiments will be apparent to persons skilled in the relevant art(s) based on the following descriptions of FIGS. 8-10.

Flowchart 900 begins with step 902. In step 902, a storage capacity of the plurality of memory regions is determined to satisfy a first storage criterion. For example, memory monitor 802 of FIG. 8 determines a storage capacity of memory 126 satisfies a first storage criterion. As shown in FIG. 8, memory monitor 802 monitors memory 126 by monitor signal 810. In an embodiment, monitor signal 810 is a (e.g., constant or near-constant) stream of activity of memory 126 to memory monitor 802. Alternatively, memory monitor 802 periodically accesses memory 126 to obtain monitor signal 810. In another alternative, a flag is raised in a register of memory monitor 802 to indicate that memory 126 has been modified (e.g., by another subservice or component of NIC 120 or system 800 writing data to or reading data from memory 126). In embodiments, monitor signal 810 indicates an amount of storage space of memory 126 that is used (e.g., a number of regions of regions 210A-210n that are in use (e.g., storing data), a number of bits/bytes of space that are used, a percentage of regions and/or bits/bytes of space that are used, and/or the like). Memory monitor 802 determines if the amount of storage space of memory 126 in use satisfies a first storage criterion. In an embodiment, the first storage criterion is a number of pointers in ring 124 reaching a predetermined threshold (e.g., ring 124 being empty or having a number of pointers at or below a predetermined number). In another example embodiment, the first storage criterion is a threshold amount of memory. In an embodiment, this threshold is a predetermined threshold (e.g., a default threshold of memory monitor 802, a threshold determined by a developer or user of computing device 106, a threshold set by a policy of the producer and/or consumer, a threshold set by a service provider of a network-based computing system that includes computing device 106, and/or the like). If the first storage criterion is satisfied (e.g., the threshold is met or exceeded), memory monitor 802 transmits capacity alert 812 to spill manager 804 indicating the first storage criterion is satisfied. In accordance with an embodiment, memory monitor 802 does not generate capacity alert 812 if spill storage 806 is full (e.g., and there is no other spill storage accessible to NIC 120).

In step 904, the first data is transferred from the first memory region to a spill storage device. For example, spill manager 804 of FIG. 8 transfers data 130 stored in region 210A to spill storage 806 as data 808. As shown in FIG. 8, spill manager 804 accesses full ring 122 to obtain one or more full pointers 814 ("full pointer 814" herein) that indicate addresses of memory 126 that are storing data to be transferred to a consumer. Spill manager 804 accesses memory 126 to obtain data stored in a region at the indicated address via a read operation 816 and transfers the data to spill storage 806 via a store signal 818. For instance, suppose spill manager 804 reads data 130 from region 210A via read operation 816. In this example, spill manager 804 stores data 130 as data 808 in spill storage 806 by transmitting store signal 818 to spill storage 806.

In embodiments, spill manager 804 selectively determines which data of memory 126 to transfer to spill storage 806. For instance, depending on the implementation, spill manager 804 selects data based on a consumer the data is to be transferred to, the order of the data in a sequence of data (e.g., a stream of data) (e.g., such that data later in the sequence of data is transferred to spill storage 806 while data earlier in the sequence of data is maintained in memory 126), a timestamp the data was written to memory 126 (e.g., such that data written at a first timestamp is transferred to spill storage 806 while data written at a second timestamp earlier than the first timestamp is maintained in memory 126), and/or the like. An example embodiment of selecting which data to transfer to spill storage 806 based on a consumer the data is to be transferred to is further described with respect to FIGS. 11 and 12, as well as elsewhere herein. While spill manager 804 is shown in FIG. 8 as transferring data stored in one region to spill storage 806, it is contemplated herein that spill manager 804 can transmit data stored in multiple regions responsive to the first storage criterion being satisfied. For instance, in an embodiment, spill manager 804 transfers a predetermined number of regions, predetermined size of data, or a size of data within a predetermined range from memory 126 to spill storage 806.

In step 906, the first ring buffer is caused to comprise a third pointer indicating the address of the first memory region, the first memory region being empty. For example, spill manager 804 of FIG. 8 causes ring 124, via an update signal 820, to include a pointer indicating the address of region 210A, region 210A being empty. For instance, suppose empty ring 124 comprises regions 208A-208n-1 indicating other regions of memory 126 are empty. In this context, spill manager 804 transmits an update signal 820 to ring 124 to cause pointer 208n to be included in ring 124. In an embodiment, pointer 208n is transferred from ring 122 (e.g., where it was stored as pointer 206A) to ring 124. Alternatively, spill manager 804 (e.g., separately) removes the pointer to region 210A from ring 122 and enqueues another pointer to region 210A to ring 124.

As described above, flowchart 1000 shows a process for accessing data in a spill storage, in accordance with an example embodiment. Flowchart 1000 begins with step 1002. In step 1002, a storage capacity of the plurality of memory regions is determined to satisfy a second storage criterion. For example, memory monitor 802 of FIG. 8 determines a storage capacity of memory 126 satisfies a second storage criterion. As shown in FIG. 8, memory monitor 802 monitors memory 126 via a monitor signal 822. In an embodiment, monitor signal 822 is a further embodiment of monitor signal 810. Memory monitor 802 receives or otherwise accesses monitor signal 822 in a similar manner as described with respect to monitor signal 810. Memory monitor 802 determines a storage capacity of memory 126 satisfies a second storage criterion based on monitor signal 822, in an embodiment. In an embodiment, the second storage criterion is a different criterion than the first storage criterion described with respect to step 902 of flowchart 900 of FIG. 9. For instance, in an embodiment, the second storage criterion is a predetermined threshold amount or percentage of regions and/or storage space that is lower than the predetermined threshold of the first storage criterion. In an embodiment, memory monitor 802 determines the second storage criterion is satisfied based on a number of pointers in ring 124 (e.g., alternative to or in addition to monitor signal 822). As shown in FIG. 8, if the second storage criterion is satisfied, memory monitor 802 provides a capacity alert 824 to spill manager 804 indicating the second storage criterion is satisfied. In an embodiment, memory monitor 802 does not generate capacity alert 824 if spill storage 806 is not storing data on behalf of computing device 106.

In step 1004, an address of a second memory region is determined based on the first ring buffer, the second memory region being empty. For example, spill manager 804 accesses ring 124 to obtain one or more empty pointers 826 ("empty pointer 826" herein). In accordance with an embodiment, spill manager 804 accesses a number of pointers equal to the number of regions of regions 210A-210n data is to be written to or based on the amount of data to be transferred from spill storage 806 to memory 126.

In step 1006, the first data is transferred from the spill storage device to the second memory region. For example, spill manager 804 of FIG. 8 transfers data 808 from spill storage 806 to region 210A. As shown in FIG. 8, spill manager 804 accesses spill storage 806 via storage read operation 828 to obtain data 808 (and/or additional data stored in spill storage 806 not shown in FIG. 8 for brevity). As also shown in FIG. 8, spill manager 804 writes the obtained data to memory 126 via a write operation 830. In accordance with an embodiment, spill manager 804 transfers data for each pointer of empty pointer 826 (or there is no data stored in spill storage 806). In another embodiment, spill manager 804 transfers data from spill storage 806 until spill storage 806 is empty. In another embodiment, spill manager 804 transfers data from spill storage 806 to memory 126 until a third storage criterion is met (or there is no data stored in spill storage 806), e.g., where the third storage criterion is a threshold between the predetermined thresholds of the first and second storage criterion. While data 130 is written back to region 210A in the example shown in FIG. 8, it is contemplated herein that data can be written to a region of regions 210A-210n that is different from the region the data was originally stored in.

In step 1008, the second ring buffer is caused to comprise a fourth pointer indicating the address of the second memory region storing the first data. For example, spill manager 804 causes ring 122 to comprise a pointer to region 210A (and pointers to other regions data was transferred to from spill storage 806) via an update signal 832.

Thus, example processes for transferring data to and from a spill storage have been described with respect to FIGS. 8-10. By "spilling" data to the spill storage, computing device 106 comprising memory monitor 802 and spill manager 804 enables "out-of-memory shuffling" where a producer is able to continue writing data to computing device 106 even if the consumer is unable to read data from computing device 106 at a fast enough rate to prevent memory 126 from reaching maximum storage capacity. For instance, suppose the producer (e.g., computing device 102 of FIG. 1) has a faster transfer speed than the consumer (e.g., computing device 104 of FIG. 1). Further suppose the producer is transferring data to the consumer that exceeds the available storage space of memory 126. In this context, NIC 120 (e.g., utilizing memory monitor 802 and spill manager 804) is able to temporarily transfer data to spill storage 806 without the producer experiencing a bottleneck. Furthermore, as data is transferred back from spill storage 806 to memory 126 as space becomes available, the consumer is able to read (or otherwise receive) data from computing device 106 without experiencing a bottleneck. In this context, transferring data between nodes is improved without requiring a change in the node's operation to account for mismatch in transfer performance between the nodes.

Furthermore, in FIG. 8, memory monitor 802 and spill manager 804 are illustrated as accessing memory 126, ring 122, and ring 124. Alternatively, e.g., wherein memory monitor 802 and/or spill manager 804 are implemented in an overflow device, memory monitor 802 and/or spill manager 804 access memory 126, ring 122, and/or ring 124 utilizing address determiner 202 and operation handler 204, not shown in FIG. 8 for brevity. In a further embodiment, address determiner 202 and operation handler 204 execute low level operations to access memory 126, ring 122, and/or ring 124 on behalf of the overflow device. In this context, address determiner 202 and operation handler 204 respond to read and write requests from the overflow device in a similar manner as to read and write requests from computing devices 102 and 104 as described with respect to FIGS. 4-6.

Memory monitor 802 and spill manager 804 have been described with respect to FIGS. 8-10 as subservices/subcomponents of NIC 120 or a separate overflow device. In another alternative, memory monitor 802 and/or spill manager 804 are implemented on a producer computing device (e.g., computing device 102 of FIG. 1) or a consumer computing device (e.g., computing device 104 of FIG. 1). In embodiments where memory monitor 802 and spill manager 804 are implemented external to NIC 120 (and/or computing device 106), monitor 802 and spill manager 804 access memory 126, ring 122, and/or ring 124 utilizing low-level operations. For instance, in an embodiment, memory monitor 802 monitors a storage capacity of memory 126, a number of pointers in ring 122, and/or a number of pointers in ring 124 by placing a verb to NIC 120, causing NIC 120 to respond with the storage capacity of memory 126, the number of pointers in ring 122, and/or the number of pointers in ring 124. As a further example, spill manager 804 uses a verb (e.g., a read verb or a write verb) to cause NIC 120 to transfer data between memory 126 and spill storage 806. In an embodiment, NIC 120 utilizes on-demand-paging to access spill storage 806. By having memory monitor 802 and spill manager 804 external to NIC 120 and interface with NIC 120 utilizing verbs in this manner, the circuit of NIC 120 can support spilling data to a spill storage while consuming fewer compute resources (e.g., as the overflow device or components are able to interface with NIC 120 without using a CPU of computing device 106).

Furthermore, while NIC 120 is described with respect to FIGS. 8-10 as writing to or from spill storage 806, in some embodiments NIC 120 is unable to directly access spill storage 806. For example, suppose NIC 120 is an RDMA NIC that enables producer and consumer devices to interface with memory 126 and ring data-structure 136 in one-sided RDMA operations. Further suppose spill storage 806 is not RDMA-accessible (e.g., a non-RDMA-accessible disk storage and/or the like). In this context, NIC 120 transfers data to an overflow device, causing the overflow device to store the data in spill storage 806. Alternatively, NIC 120 transfers data to an overflow component/service of a consumer or producer device, causing the overflow component/service to store the data in spill storage 806. Furthermore, once storage space is available in memory 126, the overflow device or overflow component/service transfers the data from spill storage 806 to NIC 120, causing NIC 120 to write the data to memory 126.

Thus, several example embodiments of overflow detection and utilization of spill storage have been described. In embodiments, the components and/or services described herein for monitoring memory and managing spill storage utilization are referred to as an "overflow manager." For instance, in an embodiment, memory monitor 802 and spill manager 804 are integrated in an overflow manager component or service of NIC 120. Alternatively, memory monitor 802 and spill manager 804 are integrated as an overflow manager of an overflow device separate from NIC 120. In another alternative, memory monitor 802 and spill manager 804 are integrated as an overflow manager of a producer or consumer device.

### V. Example Embodiments for Performing Operations for Multiple Entities

Several embodiments are described herein with respect to a ring data-structure comprising single ring pair; however, embodiments described herein are not so limited. For instance, embodiments of ring data-structures can have many (e.g., ones, tens, or even greater) ring pairs. In embodiments, each ring pair is associated with a (e.g., different) entity. For instance, a ring data-structure in an embodiment comprises a (e.g., separate) ring pair for different pairs of nodes in a network-based computing system (e.g., each pair of nodes, a subset of all pairs of nodes (e.g., pairs comprising nodes that have access to the particular ring data-structure, pairs assigned to the particular ring data-structure, and/or the like), pairs of nodes associated with different user and/or tenant accounts, and/or the like). In another example, a ring data-structure comprises separate ring pairs for different user accounts and/or tenants that have access to and/or are otherwise assigned to utilize the ring data-structure (e.g., such that nodes associated with a first account utilize a first ring pair and nodes associated with a second (e.g., different) account utilize a second (e.g., different) ring pair, such that nodes associated with a first pair of accounts utilize a first ring pair and nodes associated with a second pair of accounts utilize a second ring pair, and/or the like).

Computing devices with ring data-structures comprising multiple ring pairs are configurable in various ways, in embodiments. For example, FIG. 11 shows a block diagram of a system 1100 comprising a ring data-structure with multiple ring pairs, in accordance with an example embodiment. As shown in FIG. 11, system 1100 comprises computing device 106 (comprising NIC 120 (comprising address determiner 202, operation handler 204, memory monitor 802, and spill manager 804), memory 126 (comprising regions 210A-210n), and ring data-structure 136), computing device 102, computing device 104, and spill storage 806, as described with respect to FIGS. 1, 2, 8, and elsewhere herein. As also shown in FIG. 11, system 1100 further comprises a computing device 1106. Computing device 1106 is any type of stationary or mobile processing device, as described elsewhere herein. In accordance with an embodiment computing device 1106 is associated with a different entity than computing device 104.

As also shown in FIG. 11, ring data-structure 136 comprises rings 122 and 124, as described with respect to FIG. 1, as well as a full ring 1102 ("ring 1102" herein) and an empty ring 1104 ("ring 1104" herein). In accordance with an embodiment, rings 122 and 124 form a first ring pair and rings 1102 and 1104 form a second ring pair. As a non-limiting example, the first ring pair is associated with computing device 102 and computing device 104 and the second ring pair is associated with computing device 102 and computing device 1106. While only two ring pairs are shown in FIG. 11, embodiments described herein can comprise any number of ring pairs. Furthermore, a computing device can be associated with any number of ring pairs. For example, a computing device can be associated with a ring pair for data transfer operations between the computing device and another computing device, data transfer operations between a service executed by the computing device and a service executed by another computing device, data transfer operations between a hardware device (e.g., an accelerator, a coprocessor, an enclave, etc.) of the computing device and another computing device, service executed by the another computing device, and/or another hardware device of the another computing device, and/or data transfer operations between any other type of services, components, and/or computing devices, e.g., as described elsewhere herein. In an embodiment, each ring pair is allotted the different regions of regions 210A-210n of memory 126. In another embodiment, regions of memory 126 are shared between ring pairs. In this latter context, empty rings (e.g., rings 124 and 1104) can comprise pointers to the same empty memory region. If a pointer is removed from one of the empty rings to have its address written to a pointer of a full ring, the pointer is also removed from the other empty rings. In another alternative embodiment where regions of memory 126 are shared between ring pairs, pointers of different empty rings indicate addresses of different memory regions (i.e., do not indicate an address already indicated by a pointer of another empty ring). In this context, as memory regions are emptied, the pointer to that memory region is added to the empty ring with the fewest number of pointers, to an empty ring with a particular percentage of empty pointers, to an empty ring of a ring pair based on a percentage of pointers associated with the ring pair, and/or the like. For instance, NIC 120 operates in a manner to split the number of memory regions utilized by different ring pairs relatively equal (e.g., within a predetermined number of bytes, within a predetermined percentage, exactly equal, and/or the like), to prevent a ring pair from having more than a predetermined number or percentage of regions assigned to it, and/or the like.

Computing device 106 of FIG. 11 operates in a similar manner as described elsewhere herein, e.g., as computing device 106 of FIG. 2 is described with respect to FIGS. 3A and 3B. For instance, as shown in FIG. 11, address determiner 202 receives a write request 1114 from computing device 102. Write request 1114 is a further example of write request 212 of FIG. 2. In an embodiment, write request 1114 is an API call received from NIC 110 of computing device 102. In implementations, write request 1114 comprises an identifier of a target consumer, data to be written, information about the data to be written (e.g., a size of the data), and/or the like.

Address determiner 202 of FIG. 11 determines an address the data is to be written to, e.g., in a similar manner as described with respect to step 304 of flowchart 300A of FIG. 3A and/or step 502 of flowchart 500 of FIG. 5. For instance, in an embodiment, address determiner 202 determines which empty ring of rings 124 and 1104 to access based on an identifier of the target consumer of write request 1114. As a non-limiting running example, suppose write request 1114 indicates computing device 104 is the target consumer of the data transfer operation write request 1114 is associated with. In this context, address determiner 202 accesses ring 124 to obtain empty pointer(s) 1116 ("empty pointer 1116" herein) (e.g., in a similar manner as described with respect to step 502 of flowchart 500), where empty pointer 1116 is a further example of pointer 214 of FIG. 2. Address determiner 202 provides address(es) 1118 ("address 1118" herein) indicated by empty pointer 1116, where address 1118 is a further example of address 216 of address 216.

Operation handler 204 writes data requested in write request 1114 to memory region 210A as data 130 via write operation 1120, e.g., in a similar manner as described with respect to step 306 of flowchart 300A of FIG. 3A, where write operation 1120 is a further example of write operation 218. For instance, in an embodiment, write operation 1120 is perceived as an atomic operation. As also shown in FIG. 11, operation handler 204 updates ring 122 to include a pointer indicating the address of region 210A via update signal 1122, which is a further example of update signal 120 of FIG. 2 (e.g., in a similar manner as described with respect to step 308 of flowchart 300A of FIG. 3A).

In the context of FIG. 11, computing device 104 and computing device 1106 are consumers associated with respective ring pairs. Computing device 104 and computing device 1106 transmit read requests (e.g., periodically) to read data from Computing device 106 that is intended to be transferred to their respective memory. For example, as shown in FIG. 11, computing device 104 transmits a read request 1124 in a similar manner as described with respect to step 310 of flowchart 300B of FIG. 3B, where read request 1124 is a further example of read request 222 of FIG. 2. In an embodiment, read request 1124 comprises an identifier of computing device 104.

Responsive to (or otherwise subsequent to) receiving read request 1124, address determiner 202 of FIG. 11 determines an address of data stored in memory 126 that is to be transferred to computing device 104 (e.g., in a similar manner as described with respect to step 312 of flowchart 300B of FIG. 3B). For instance, in an embodiment, address determiner 202 determines which empty ring of rings 122 and 1102 to access based on an identifier included in read request 1124. With continued reference to the running example, and as shown in FIG. 11, suppose read request 1124 comprises an identifier of computing device 104. In this context, address determiner 202 accesses ring 122 to receive one or more full pointers 1126 ("full pointer 1126" herein). In an embodiment, full pointer 1126 comprises a pointer to region 210A. In an example, suppose data 1110 stored in region *210n* is associated with an identifier of computing device 1106. In this example, ring 122 does not include a pointer to region 210n and instead, ring 1102 comprises a pointer to region *210n.* In this context, full pointer 1126 does not include a pointer to region *210n.* As shown in FIG. 11, address determiner 202 provides the one or more address(es) 1128 ("address 1128" herein) indicated by full pointer 1126 to operation handler 204.

Operation handler 204 of FIG. 11 reads data 130 from region 210A based on address 1128 via read operation 1130, e.g., in a similar manner as step 314 of flowchart 300B of FIG. 3B wherein read operation 1130 is a further example of read operation 228. For example, in an embodiment, read operation 1130 is perceived as an atomic operation. Operation handler 204 provides data 130 to computing device 104 in a response 1132, which is a further example of response 230 as described with respect to step 316 of flowchart 300B. Operation handler 204 of FIG. 11 updates empty ring 124 to include a pointer to region 210A via update signal 1134, e.g., in a similar manner as step 318 of flowchart 300B where update signal 1134 is a further example of update signal 232. In an embodiment where rings 124 and 1104 comprise pointers indicating addresses of the same empty regions, operation handler 204 also updates ring 1104 (e.g., via update signal 1134 or another update signal not shown in FIG. 11) to include a pointer to region 210A.

As stated above, NIC 120 of FIG. 11 comprises memory monitor 802 and spill manager 804, as described with respect to FIG. 8. In some embodiments where a ring data-structure 136 comprises multiple ring pairs, memory monitor 802 and/or spill manager 804 operate in a manner that prioritizes data availability of one or more ring pairs over one or more other ring pairs. NIC 120 comprising memory monitor 802 and spill manager 804 operates in various ways to prioritize data availability. FIG. 12 shows a flowchart 1200 of a process for prioritizing data availability, in accordance with an example embodiment. In an embodiment, NIC 120 of FIG. 11 operates according to flowchart 1200. Note that flowchart 1200 need not be performed in all embodiments. Further structural and operational embodiments will be apparent to persons skilled in the relevant art(s) based on the following description of FIG. 12 with respect to FIG. 11.

FIG. 12 comprises step 1202. In step 1202, transfer of data from a first memory region to a spill storage device is prioritized over transfer of data from a second memory region to the spill storage device. For example, suppose memory monitor 802 is monitoring memory 126 via a monitor signal 1136, which is a further example of monitor signal 810 of FIG. 8, and determines a storage capacity of memory 126 satisfies a storage criterion (e.g., in a similar manner as described with respect to step 902 of flowchart 900 of FIG. 9). In this context, memory monitor 802 provides capacity alert 1138 to spill manager 804 indicating the storage criterion is satisfied. In an embodiment, spill manager 804 prioritizes which data availability based on an entity (or ring pair) the data is associated with. In this context, responsive to capacity alert 1138, spill manager 804 causes transfer of data associated with another entity (or ring pair) to spill storage 806. In some embodiments, spill manager 804 prioritizes data availability based on ring information 1140 received from ring 122 and/or ring information 1142 received from ring 1102. Ring information 1140 and ring information 1142 comprise information regarding respective rings such as, but not limited to, a number of pointers within the ring, a percentage of the ring's maximum size (i.e., the maximum number of pointers) currently in use, a timestamp of the last pointer written to the ring, a timestamp of when the last pointer was removed from the ring, and/or any other information regarding the ring.

As a non-limiting example described with respect to FIG. 11, suppose computing device 104 (or an entity associated with computing device 104 or the ring pair comprising rings 122 and 124) is prioritized over computing device 1106 (or an entity associated with computing device 1106 or the ring pair comprising rings 1102 and 1104). In this context, spill manager 804 causes data 1110, which is associated with computing device 1106, to be transferred to spill storage 806. Spill manager 804 determines an address of a memory region storing data on behalf of computing device 1106 by accessing ring 1102 and receiving one or more full pointers (e.g., as part of ring information 1142) that indicate respective addresses of regions of regions 210A-210n that store data to be transferred to computing device 1106. For instance, suppose the full pointers comprise a pointer indicating an address of region 210n. In an embodiment, spill manager 804 determines data is to be transferred from (e.g., only) one region. Alternatively, spill manager 804 determines data is to be transferred from multiple regions. As shown in FIG. 11, spill manager 804 obtains data 1110 from region *210n* via transfer operation 1144 and stores data 1110 in spill storage 806 as data 1112 via a storage signal 1146. In embodiments, spill manager 804 updates ring 1104 to include a pointer to region *210n.*

In embodiments, data availability of data of one entity is prioritized over another for various reasons. For instance, spill manager 804 prioritizes availability based on a subscription of an entity (e.g., an entity is subscribed to a subscription that prioritizes availability of the entity's data over entities that are not subscribed to the subscription), based on how much storage space of computing device 106 the entity is utilizing compared to the other (e.g., if an entity is utilizing an amount (or percentage) of storage space that satisfies a greed criterion, spill manager 804 can flag or otherwise determine the entity as a "greedy entity" and de-prioritizes data availability of the entity), based on a configuration or property of the consumer (e.g., data availability of data to be transferred to a first consumer device that has faster processing or reading capabilities in relation to a second consumer device is prioritized over data availability of data to be transferred to the second consumer device), based on a first-come-first-serve basis (e.g., availability of data of a data transfer operation associated with a first read request or a first read request in a first sequence of requests received prior to a second read request or a first read request in a second sequence of requests is prioritized over availability of data of a data transfer operation associated with the second read request or the first read request in the second sequence of requests), based on how much data of a transfer operation is stored in memory 126 (e.g., if a first data transfer operation has (e.g., significantly) more chunks of data stored in memory 126 than a second data transfer operation, spill manager 804 stores a portion of chunks of the first data transfer operation in spill storage 806) and/or the like. By prioritizing data availability in this manner, embodiments allow flexible data transfer operations to prioritize particular data transfer operations in order to reduce the number of nodes impacted by bottlenecks, reduce or avoid bottlenecks for nodes that are not greedy, and/or improve operation of a subset of nodes.

### VI. Further Example Embodiments

### A. Example Embodiments of a Consumer Device with a Ring Data-Structure

Several example embodiments have been described herein with respect to a ring data-structure in a computing device that is separate from producer and consumer devices. In some embodiments, a producer or consumer includes the ring data-structure. Such producers and/or consumers are configurable in various ways. For example, FIG. 13 shows block diagram of a system 1300 for transferring data to a receiving computing device comprising a ring data-structure, in accordance with an example embodiment. System 1300 comprises computing device 102 and computing device 104. As shown in FIG. 13, computing device 102 comprises NIC 110, memory 112 (storing data 128), requester 402, and instructor 404, as described with respect to FIGS. 1 and 4, and an application 1320. In an embodiment, application 1320 is an application or other service executed by processor 108 of computing device 102 (not shown in FIG. 1 for brevity), a coprocessor of computing device 102, an accelerator of computing device 102, and/or the like. In an embodiment, requester 402 and/or instructor 404 are incorporated in application 1320 as sub-services thereof. As also shown in FIG. 13, computing device 104 comprises processor 114, NIC 116, and memory 118, as described with respect to FIG. 1, as well as a ring data-structure 1350. Ring data-structure 1350 comprises a full ring 1306 ("ring 1306" herein) and an empty ring 1308 ("ring 1308" herein). Memory 118 comprises regions 1310A-1310n. In an embodiment, ring data-structure 1350 is stored in memory 118. Rings 1306 and 1308 comprise respective pointers, e.g., in a similar manner as rings 122 and 124 as described elsewhere herein. Pointers of ring 1306 indicate addresses of full regions of regions 1310A-1310n and pointers of ring 1308 indicate addresses of empty regions of regions 1310A-*1310n.* NIC 116 comprises an address determiner 1302 and an operation handler 1304, each of which are implemented as subcomponents and/or subservices of NIC 116.

In embodiments, processor 114, another processor of computing device 104 (e.g., a processor of an accelerator), an application executed by computing device 104, and/or the like, obtains addresses indicated by ring data-structure 1350. For example, as shown in FIG. 13, processor 114 transmits an address request 1312 to address determiner 1302. Address request 1312 is a request for addresses of regions of memory 118 that store data and/or addresses of regions of memory 118 that are available to store data. Depending on the implementation, address request 1312 is a request for all addresses, a request for addresses for which pointers were added to ring 1306 since a previous address request was received from processor 114, addresses added to ring 1306 since a particular timestamp, the most recent n number of pointers added to ring 1306, addresses associated with a particular consumer (e.g., based on an identifier of the producer included in address request 1312), and/or the like. For instance, as shown in FIG. 13, suppose address request 1312 is a request for addresses of regions of memory that are storing data. In this context, address determiner 1302 obtains one or more full pointers 1314 ("pointer 1314" herein) from ring 1306 and provides the one or more addresses 1316 ("address 1316" herein) to processor 114. Processor 114 is able to access data stored in memory 118 via access operation 1318 utilizing address 1316. By having processor 114 access address determiner 1302 to determine addresses to access in memory 118, pointers of ring data-structure 1350 are able to be updated and data can be transferred to memory 118 utilizing NIC 116 without requiring processor 114. Furthermore, processor 114 in an embodiment maintains address 1316 in working memory (not shown in FIG. 13 for brevity) such that it accesses NIC 116 to obtain pointers (e.g., only) if there is a change in memory 118, if data is not found at an address of address 1316.

In embodiments, NIC 116 operates in a similar manner as NIC 120 of FIG. 2 to enable data transfer operations to computing device 104 utilizing ring data-structure 1350. For instance, as shown in FIG. 13, address determiner 1302 receives a write request 1326 from NIC 110 of computing device 102. Write request 1326 in an embodiment is a one-sided RDMA write request. In an embodiment, NIC 110 generates write request 1326 in response to a write request 1324 received from requester 402. In this context, write request 1326 is a forwarded version of write request 1324. In an embodiment, requester 402 generates write request 1324 in response to a request 1322 received from application 1320. Request 1322 is a request to transfer data 128 to computing device 104. Responsive to receiving request 1326, address determiner 1302 accesses ring 1308 to obtain one or more empty pointers 1328 ("pointer 1328"), e.g., in a similar manner as described with respect to step 502 of flowchart 500 of FIG. 5. Pointer 1328 indicates an address of a region of regions 1310A-1310n that is empty or otherwise available to store data. Address determiner 1302 provides pointer 1328 (or the address indicated by pointer 1328) to NIC 110 in a response 1330 and NIC 110 provides pointer 1328 (or the address) to requestor 402 in a response 1332. Requester 402 provides the address or addresses of pointer 1328 to instructor 404 as information 1334. Instructor 404 selects an address that data 128 is to be written to, obtains data 128 from memory 112 via access operation 1336, and transmits write instructions 1338 to NIC 110, causing NIC 110 to transmit write instructions 1340 to operation handler 1304. Write instructions 1338 and/or write instructions 1340 comprise instructions to write data 128 to the region of memory 118 at the address selected by instructor 404. For instance, suppose instructor 404 selects the address of region 1310A. In this example, write instructions 1340 indicate data 128 is to be written to region 1310A. In an example, write instructions 1340 are forward versions of write instructions 1338.

Operation handler 1304 receives write instructions 1340 from instructor 404 in a similar manner as described with respect to step 506 of flowchart 500 of FIG. 5. Responsive to receiving write instructions 1340, operation handler 1304 writes data 128 to region 1310A via a write operation 1342, e.g., in a similar manner as described with respect to step 508 of flowchart 500 of FIG. 5. In an embodiment, write operation 1342 is perceived as an atomic operation. Operation handler 1304 updates ring 1306 to include a pointer to region 1310A via an update signal 1344, e.g., in a similar manner as described with respect to step 308 of flowchart 300A of FIG. 3A. In an embodiment, and as shown in FIG. 13, operation handler 1304 provides an update indication 1346 to processor 114. In an embodiment, update indication 1346 indicates the change in regions 1310A-1310n of memory 118 (e.g., which regions are now full or now empty). Alternatively, update indication 1346 indicates that ring data-structure 1350 is updated and processor 114 is to obtain an update of pointers from address determiner 1302. In another alternative embodiment where operation handler 1304 does not transmit an update indication 1346 to processor 114, address determiner 1302 provides an update of pointers to processor 114 (e.g., subsequent to ring data-structure 1350 being updated, subsequent to a (e.g., periodic) request from processor 114, and/or the like).

### B. Example Embodiments of a Producer Device with a Ring Data-Structure

Example embodiments have been described herein with respect to ring data-structures within intermediary computing devices that are separate from producer and consumer devices, as well as an example where the consumer includes the ring data-structure. In some embodiments, a producer includes the RDMA device comprising a ring data-structure. Such producers are configurable in various ways. For example, FIG. 14 shows block diagram of a system 1400 for transferring data from a computing device comprising a ring data-structure, in accordance with an example embodiment. System 1300 comprises computing device 102 and computing device 104. As shown in FIG. 14, computing device 104 comprises processor 114, NIC 116, and memory 118, as described with respect to FIG. 1. In FIG. 14, memory 118 comprises regions *1410A-14010n.* As also shown in FIG. 14, computing device 102 comprises NIC 110, memory 112 (storing data 128), requester 402, and instructor 404, as described with respect to FIGS. 1 and 4, as well as a ring data-structure 1450. Ring data-structure 1450 comprises a full ring 1406 ("ring 1406" herein) and an empty ring 1408 ("ring 1408" herein). Rings 1406 and 1408 comprise respective pointers, e.g., in a similar manner as rings 122 and 124 as described elsewhere herein. Pointers of ring 1406 indicate addresses of full regions of regions 1410A-*1410n* and pointers of ring 1408 indicate addresses of empty regions of regions 1410A-*1410n.* In an embodiment, ring data-structure 1450 is stored in memory 112. NIC 110 comprises an address determiner 1402 and an operation handler 1404, each of which are implemented as subcomponents and/or subservices of NIC 110.

In embodiments, a processor of computing device 102 (e.g., processor 108 or another processor (e.g., a processor of an accelerator), not shown in FIG. 14 for brevity), an application executed by computing device 104, and/or the like, obtains addresses indicated by ring data-structure 1450. For instance, a processor of computing device 102 obtains addresses from ring data-structure 1450 in a similar manner as processor 114 of FIG. 13 obtains addresses from ring data-structure 1350. For example, suppose requester 402 initiates an address request 1412 to address determiner 1402. In an embodiment, address request 1412 specifies an endpoint of computing device 104. In this context, address determiner 1402 transmits an address request 1414 to NIC 116, causing NIC 116 to obtain addresses 1416 of memory 118 that specify locations of regions 1410A-1410n. Depending on the implementation, addresses 1416 specify all of the regions or a subset of regions (e.g., one region, a percentage of regions, a number of regions specified in address request 1412, empty regions, full regions, uncorrupted regions, and/or the like). NIC 116 provides addresses 1416 in a response 1418 to address determiner 1402. Address determiner 1402 updates ring data-structure 1450 so that rings 1406 and/or 1408 include pointers to addresses 1416. For instance, address determiner 1402 updates ring 1406 to include addresses of regions 1410A-1410n that are storing data and updates ring 1408 to include addresses of regions 1410A-1410n that are empty. By having the processor or application obtain addresses in this manner, pointers of ring data-structure 1450 are able to be updated and data can be transferred to or from memory 112 utilizing NIC 110 without requiring the processor of computing device 102 (in some implementations). Furthermore, the processor or application in an embodiment maintains the addresses in working memory (not shown in FIG. 14 for brevity) such that it accesses NIC 110 to obtain pointers (e.g., only) if there is a change in memory 112 or if data is not found at an address of the obtained addresses.

In embodiments, NIC 110 operates in a similar manner as NIC 120 of FIG. 2 to enable data transfer operations to computing device 104 utilizing ring data-structure 1450. For instance, as shown in FIG. 14, address determiner 1402 receives a write request 1422 from requester 402 of computing device 102. Write request 1422 in an embodiment is a one-sided RDMA write request. In an embodiment, write request 1422 is a request to transfer data 128 to computing device 104. Responsive to receiving write request 1422, address determiner 1302 accesses ring 1408 to obtain one or more empty pointers 1424 ("pointer 1424"), e.g., in a similar manner as described with respect to step 502 of flowchart 500 of FIG. 5. Pointer 1424 indicates an address of a region of regions 1410A-1410*n* that is empty or otherwise available to store data. Address determiner 1402 provides pointer 1424 (or the address indicated by pointer 1424) to requester 402 in a response 1426. Requester 402 provides the address or addresses of pointer 1424 to instructor 404 as information 1428. Instructor 404 selects an address that data 128 is to be written to, obtains data 128 from memory 112 via access operation 1430, and transmits write instructions 1432 to operation handler 1404. Write instructions 1432 comprise instructions to write data 128 to the region of memory 118 at the address selected by instructor 404. For instance, suppose instructor 404 selects the address of region 1410A. In this example, write instructions 1432 indicate data 128 is to be written to region 1410A.

Operation handler 1404 receives write instructions 1432 from instructor 404 in a similar manner as described with respect to step 506 of flowchart 500 of FIG. 5. Responsive to receiving write instructions 1432, operation handler 1304 causes data 128 to be written to region 1410A via a write request 1434. In an embodiment, write request 1434 is perceived as an atomic operation. As shown in FIG. 14, NIC 116 receives write request 1434 and writes data 128 to region 1410A via a write operation 1436, e.g., in a similar manner as described with respect to step 508 of flowchart 500 of FIG. 5. Operation handler 1404 updates ring 1406 to include a pointer to region 1410A via an update signal 1438, e.g., in a similar manner as described with respect to step 308 of flowchart 300A of FIG. 3A. In an embodiment, operation handler 1404 provides an update indication to requester 402 or a processor of computing device 102. In an embodiment, the update indication indicates the change in regions *1410A-1410n* of memory 112 (e.g., which regions are now full or now empty). Alternatively, the update indication indicates that ring data-structure 1450 is updated and the processor is to obtain an update of pointers from address determiner 1402. In another alternative embodiment where operation handler 1404 does not transmit an update indication to the processor or requester 402, address determiner 1402 provides an update of pointers to the processor or requester 402 (e.g., subsequent to ring data-structure 1450 being updated, subsequent to a (e.g., periodic) request from the processor or requester 402, and/or the like).

### C. Example Two-Sided RDMA Embodiments

Example embodiments have been described with respect to various communication protocols, such as one-sided RDMA protocol, e.g., where computing device 106 of FIG. 1 does not require a processor to allow other devices to write to and/or read from memory 126. It is further contemplated herein that various embodiments of data operations utilizing a ring data-structure described herein can use other communication protocols. For instance, in an alternative embodiment, an implementation of a device comprising a ring data-structure utilizes a two-sided RDMA protocol. In two-sided RDMA implementations, computing device 106 of FIG. 2 operates in a similar manner as described with respect to FIG. 1 with the following differences. In two-sided RDMA implementations, the sending and receiving devices maintain queues of a queue pair. For instance, NIC 110 of FIG. 2 maintains a sending queue and a completion queue and NIC 120 maintains a receiving queue and a completion queue. NIC 110 enqueues a pointer to the send queue where the pointer points to the location of data 128. NIC 120 obtains a pointer from empty ring 124 (e.g., utilizing address determiner 202, as described herein) and enqueues the pointer in the receiving queue. Data 128 is transferred via the send queue and receive queue. NIC 120 writes data 128 from the receive queue to memory 126 at the address of the pointer in the receiving queue. Once data is sent from computing device 102, NIC 110 raises a flag in its completion queue. Once data is written from the receive queue to memory 126, NIC 120 raises a flag in its completion queue. A similar process is used for transmitting data from computing device 106 to the receiving device (e.g., computing device 104), where NIC 120 obtains the pointer to the address the data is stored in from full ring 122 and enqueues the pointer in a send queue. In this context, NIC 116 of computing device 104 enqueues a pointer to an empty region of memory 118 in its receive queue and data is transferred from computing device 106 to computing device 104.

Thus, an example process of transferring data in a two-sided RDMA protocol implementation has been described with respect to FIG. 2. In an embodiment, computing device 106 manages queues between multiple producers and/or consumers. In an embodiment, computing device 106 prioritizes a consumer or producer over another producer or consumer in a similar manner as described with respect to FIG. 12.

Thus, example embodiments of two-sided RDMA is described with respect to FIG. 2. By enabling two-sided RDMA, embodiments are able to support various two-sided RDMA operations while leveraging improved transfer operations with ring data-structures such as ring data-structure 136 of FIG. 2.

### D. Example Zero-Copy Interface Embodiments

Applications can access the API through a zero-copy interface to avoid any unnecessary data movements and latency. For instance, in an embodiment, a producer is able to transfer data from its memory to an RDMA device or a consumer without having to copy the data to working memory of the producer device or device associated with the producer. In another embodiment, a consumer is able to read data from the RDMA device to its memory (e.g., storage memory) without having to copy the data to its working memory. This reduces the number of computing cycles used in data transfer operations and reduces memory bandwidth consumed in data transfer operations.

### E. Example Accelerator RDMA Embodiments

Several example embodiments have been described herein with respect to RDMA; however, implementations are not so limited. For example, some embodiments of data transfer operations utilizing a ring data-structure are implemented in accelerator RDMA scenarios. In this context, data is transferred to or from accelerator memory (e.g., graphics processing unit (GPU) memory, neural processing unit (NPU) memory, or other accelerator memory) without requiring an intermediary transfer to a device's CPU memory. For instance, in a non-limiting example, a producer is able to, utilizing a ring data-structure such as ring data-structure 136 of FIG. 1, transfer data to accelerator memory of a consumer without having to transfer the data to CPU memory of the consumer first. This reduces the amount of compute resources and time required to transfer data to an accelerator memory. Furthermore, since the CPU memory is not utilized in this type of RDMA, other operations can be performed with respect to the CPU memory concurrent to the accelerator RDMA operation.

### F. Example Integrated Circuit Embodiments

Several example embodiments have been described herein with respect to computing devices comprising a NIC and a ring data-structure, as well as producer or consumers comprising a ring data-structure. It is also contemplated herein that components configured to execute low-level operations and ring data-structures can be implemented in an integrated circuit, e.g., a field programmable gate array (FPGA) or other type of integrated circuit. In this context, the integrated circuit comprises components configured to execute low-level operations based on (e.g., RDMA) verbs and memory storing the ring data-structure. In an embodiment, the components configured to execute low-level operations are also referred to as an "RDMA stack." In an alternative embodiment, the integrated circuit comprises the RDMA stack and the ring data-structure is stored in memory separate from the integrated circuit. In implementations, the components configured to execute low-level operations operate in a similar manner as described with respect to address determiners, operation handlers, memory monitors, and/or spill managers described elsewhere herein.

### VII. Example Computer System Implementation

Embodiments of data transferring in RDMA operations utilizing a ring data-structure described herein are implemented in hardware, or hardware combined with one or both of software and/or firmware. For example address determiner 202, operation handler 204, requester 402, instructor 404, requester 406, instructor 408, memory monitor 802, spill manager 804, application 1320, address determiner 1302, operation handler 1304, and/or the components described therein, and/or the steps of flowcharts 300A, 300B, 500, 600, 700, 900, 1000, and/or 1200, are each implemented as computer program code/instructions configured to be executed in one or more processors and stored in a computer readable storage medium. Alternatively, computing device 102, computing device 104, computing device 106, processor 108, NIC 110, memory 112, processor 114, NIC 116, memory 118, NIC 120, ring data-structure 136, memory 126, address determiner 202, operation handler 204, requester 402, instructor 404, requester 406, instructor 408, memory monitor 802, spill manager 804, spill storage 806, computing device 1106, address determiner 1302, operation handler 1304, ring data-structure 1350, RDMA device 1400, and/or the components described therein, and/or the steps of flowcharts 300A, 300B, 500, 600, 700, 900, 1000, and/or 1200, are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

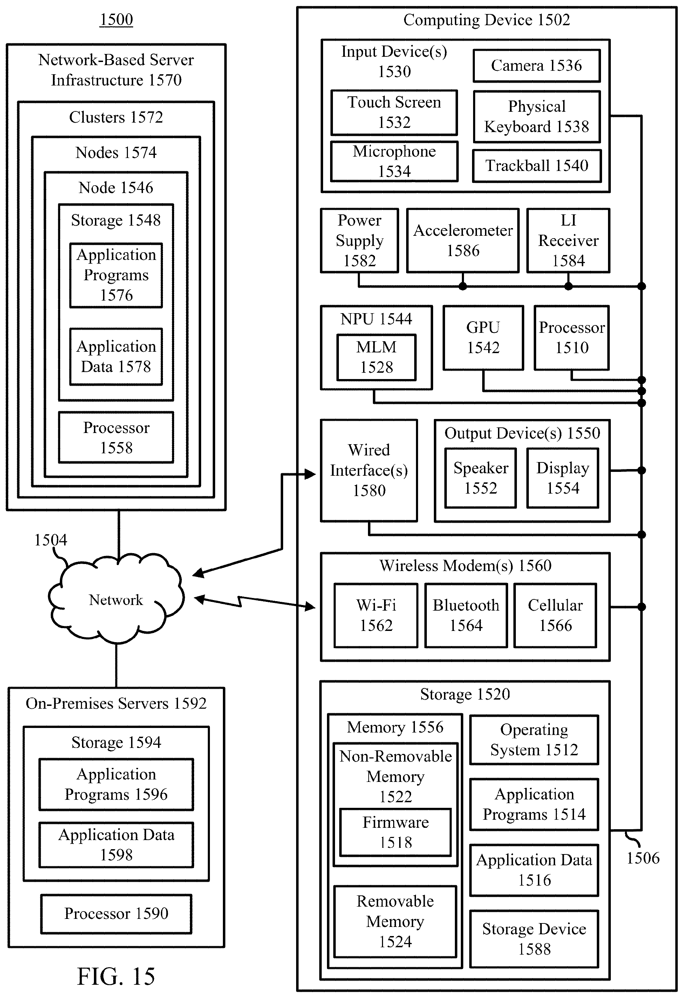

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 15. FIG. 15 shows a block diagram of an exemplary computing environment 1500 that includes a computing device 1502. Computing device 1502 is an example of computing device 102, computing device 104, computing device 106, system 200, system 400, system 800, system 1300, and/or RDMA device 1400, which each include one or more of the components of computing device 1502. In some embodiments, computing device 1502 is communicatively coupled with devices (not shown in FIG. 15) external to computing environment 1500 via network 1504. Network 1504 comprises one or more networks such as local area networks (LANs), wide area networks (WANs), enterprise networks, the Internet, etc. In examples, network 1504 includes one or more wired and/or wireless portions. In some examples, network 1504 additionally or alternatively includes a cellular network for cellular communications. Network 1504 is an example of network 134, in an embodiment. Computing device 1502 is described in detail as follows.

Computing device 1502 can be any of a variety of types of computing devices. Examples of computing device 1502 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 1502 is a stationary computing device such as a desktop computer, a personal computer (PC), a stationary server device, a minicomputer, a mainframe, a supercomputer, etc.

As shown in FIG. 15, computing device 1502 includes a variety of hardware and software components, including a processor 1510, a storage 1520, a graphics processing unit (GPU) 1542, a neural processing unit (NPU) 1544, one or more input devices 1530, one or more output devices 1550, one or more wireless modems 1560, one or more wired interfaces 1580, a power supply 1582, a location information (LI) receiver 1584, and an accelerometer 1586. Storage 1520 includes memory 1556, which includes non-removable memory 1522 and removable memory 1524, and a storage device 1588. Storage 1520 also stores an operating system 1512, application programs 1514, and application data 1516. Wireless modem(s) 1560 include a Wi-Fi modem 1562, a Bluetooth modem 1564, and a cellular modem 1566. Output device(s) 1550 includes a speaker 1552 and a display 1554. Input device(s) 1530 includes a touch screen 1532, a microphone 1534, a camera 1536, a physical keyboard 1538, and a trackball 1540. Not all components of computing device 1502 shown in FIG. 15 are present in all embodiments, additional components not shown may be present, and in a particular embodiment any combination of the components are present. In examples, components of computing device 1502 are mounted to a circuit card (e.g., a motherboard) of computing device 1502, integrated in a housing of computing device 1502, or otherwise included in computing device 1502. The components of computing device 1502 are described as follows.

In embodiments, a single processor 1510 (e.g., central processing unit (CPU), microcontroller, a microprocessor, signal processor, ASIC (application specific integrated circuit), and/or other physical hardware processor circuit) or multiple processors 1510 are present in computing device 1502 for performing such tasks as program execution, signal coding, data processing, input/output processing, power control, and/or other functions. In examples, processor 1510 is a single-core or multi-core processor, and each processor core is single-threaded or multithreaded (to provide multiple threads of execution concurrently). Processor 1510 is configured to execute program code stored in a computer readable medium, such as program code of operating system 1512 and application programs 1514 stored in storage 1520. The program code is structured to cause processor 1510 to perform operations, including the processes/methods disclosed herein. Operating system 1512 controls the allocation and usage of the components of computing device 1502 and provides support for one or more application programs 1514 (also referred to as "applications" or "apps"). In examples, application programs 1514 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 1510 includes one or more general processors (e.g., CPUs) configured with or coupled to one or more hardware accelerators, such as one or more NPUs 1544 and/or one or more GPUs 1542.

Any component in computing device 1502 can communicate with any other component according to function, although not all connections are shown for ease of illustration. For instance, as shown in FIG. 15, bus 1506 is a multiple signal line communication medium (e.g., conductive traces in silicon, metal traces along a motherboard, wires, etc.) present to communicatively couple processor 1510 to various other components of computing device 1502, although in other embodiments, an alternative bus, further buses, and/or one or more individual signal lines is/are present to communicatively couple components. Bus 1506 represents one or more of any of several types of bus structures, including a memory bus or memory controller, a peripheral bus, an accelerated graphics port, and a processor or local bus using any of a variety of bus architectures.

Storage 1520 is physical storage that includes one or both of memory 1556 and storage device 1588, which store operating system 1512, application programs 1514, and application data 1516 according to any distribution. Non-removable memory 1522 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 1522 includes main memory and is separate from or fabricated in a same integrated circuit as processor 1510. As shown in FIG. 15, non-removable memory 1522 stores firmware 1518 that is present to provide low-level control of hardware. Examples of firmware 1518 include BIOS (Basic Input/Output System, such as on personal computers) and boot firmware (e.g., on smart phones). In examples, removable memory 1524 is inserted into a receptacle of or is otherwise coupled to computing device 1502 and can be removed by a user from computing device 1502. Removable memory 1524 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more storage device 1588 are present that are internal and/or external to a housing of computing device 1502 and are or are not removable. Examples of storage device 1588 include a hard disk drive, an SSD, a thumb drive (e.g., a USB (Universal Serial Bus) flash drive), or other physical storage device.

One or more programs are stored in storage 1520. Such programs include operating system 1512, one or more application programs 1514, and other program modules and program data. Examples of such application programs include computer program logic (e.g., computer program code/instructions) for implementing address determiner 202, operation handler 204, requester 402, instructor 404, requester 406, instructor 408, memory monitor 802, spill manager 804, application 1320, address determiner 1302, operation handler 1304, and/or the components described therein, and/or the steps of flowcharts 300A, 300B, 500, 600, 700, 900, 1000, and/or 1200.

Storage 1520 also stores data used and/or generated by operating system 1512 and application programs 1514 as application data 1516. Examples of application data 1516 include web pages, text, images, tables, sound files, video data, and other data. In examples, application data 1516 is sent to and/or received from one or more network servers or other devices via one or more wired or wireless networks. Storage 1520 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 1502 through one or more input devices 1530 and receives information from computing device 1502 through one or more output devices 1550. Input device(s) 1530 includes one or more touch screen 1532, microphone 1534, camera 1536, physical keyboard 1538 and/or trackball 1540 and output device(s) 1550 includes one or more of speaker 1552 and display 1554. Each input device(s) 1530 and output device(s) 1550 are integral to computing device 1502 (e.g., built into a housing of computing device 1502) or are external to computing device 1502 (e.g., communicatively coupled wired or wirelessly to computing device 1502 via wired interface(s) 1580 and/or wireless modem(s) 1560). Further input devices 1530 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 1554 displays information, as well as operating as touch screen 1532 by receiving user commands and/or other information (e.g., by touch, finger gestures, virtual keyboard, etc.) as a user interface. Any number of each type of input device(s) 1530 and output device(s) 1550 are present, including multiple microphones 1534, multiple cameras 1536, multiple speakers 1552, and/or multiple displays 1554.

In embodiments where GPU 1542 is present, GPU 1542 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 1542 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 1544 (also referred to as an "artificial intelligence (Al) accelerator" or "deep learning processor (DLP)") is a processor or processing unit configured to accelerate artificial intelligence and machine learning applications, such as execution of machine learning (ML) model (MLM) 1528. In an example, NPU 1544 is configured for a data-driven parallel computing and is highly efficient at processing massive multimedia data such as videos and images and processing data for neural networks. NPU 1544 is configured for efficient handling of AI-related tasks, such as speech recognition, background blurring in video calls, photo or video editing processes like object detection, etc.

In embodiments disclosed herein that implement ML models, NPU 1544 can be utilized to execute such ML models, of which MLM 1528 is an example. For instance, where applicable, MLM 1528 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 1544 is used to train MLM 1528. To train MLM 1528, training data includes input features (attributes) and their corresponding output labels/target values (e.g., for supervised learning) is collected. A training algorithm is a computational procedure that is used so that MLM 1528 learns from the training data. Parameters/weights are internal settings of MLM 1528 that are adjusted during training by the training algorithm to reduce a difference between predictions by MLM 1528 and actual outcomes (e.g., output labels). In some examples, MLM 1528 is set with initial values for the parameters/weights. A loss function measures a dissimilarity between predictions by MLM 1528 and the target values, and the parameters/weights of MLM 1528 are adjusted to minimize the loss function. The parameters/weights are iteratively adjusted by an optimization technique, such as gradient descent. In this manner, MLM 1528 is generated through training by NPU 1544 to be used to generate inferences based on received input feature sets for particular applications. MLM 1528 is generated as a computer program or other type of algorithm configured to generate an output (e.g., a classification, a prediction/inference) based on received input features, and is stored in the form of a file or other data structure.

In examples, such training of MLM 1528 by NPU 1544 is supervised or unsupervised. According to supervised learning, input objects (e.g., a vector of predictor variables) and a desired output value (e.g., a human-labeled supervisory signal) train MLM 1528. The training data is processed, building a function that maps new data on expected output values. Example algorithms usable by NPU 1544 to perform supervised training of MLM 1528 in particular implementations include support-vector machines, linear regression, logistic regression, Naive Bayes, linear discriminant analysis, decision trees, K-nearest neighbor algorithm, neural networks, and similarity learning.

In an example of supervised learning where MLM 1528 is an LLM, MLM 1528 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided with the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 1528 is trained to learn patterns from unlabeled data. For instance, in embodiments where MLM 1528 implements unsupervised learning techniques, MLM 1528 identifies one or more classifications or clusters to which an input belongs. During a training phase of MLM 1528 according to unsupervised learning, MLM 1528 tries to mimic the provided training data and uses the error in its mimicked output to correct itself (i.e., correct weights and biases). In further examples, NPU 1544 perform unsupervised training of MLM 1528 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 1544 need not necessarily be present in all ML model embodiments. In embodiments where ML models are present, any one or more of processor 1510, GPU 1542, and/or NPU 1544 can be present to train and/or execute MLM 1528.

One or more wireless modems 1560 can be coupled to antenna(s) (not shown) of computing device 1502 and can support two-way communications between processor 1510 and devices external to computing device 1502 through network 1504, as would be understood to persons skilled in the relevant art(s). Wireless modem 1560 is shown generically and can include a cellular modem 1566 for communicating with one or more cellular networks, such as a GSM network for data and voice communications within a single cellular network, between cellular networks, or between the mobile device and a public switched telephone network (PSTN). In examples, wireless modem 1560 also or alternatively includes other radio-based modem types, such as a Bluetooth modem 1564 (also referred to as a "Bluetooth device") and/or Wi-Fi modem 1562 (also referred to as an "wireless adaptor"). Wi-Fi modem 1562 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 1564 is configured to communicate with another Bluetooth-capable device according to the Bluetooth short-range wireless technology standard(s) such as IEEE 802.15.1 and/or managed by the Bluetooth Special Interest Group (SIG).

Computing device 1502 can further include power supply 1582, LI receiver 1584, accelerometer 1586, and/or one or more wired interfaces 1580. Example wired interfaces 1580 include a USB port, IEEE 1594 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 1580 of computing device 1502 provide for wired connections between computing device 1502 and network 1504, or between computing device 1502 and one or more devices/peripherals when such devices/peripherals are external to computing device 1502 (e.g., a pointing device, display 1554, speaker 1552, camera 1536, physical keyboard 1538, etc.). Power supply 1582 is configured to supply power to each of the components of computing device 1502 and receives power from a battery internal to computing device 1502, and/or from a power cord plugged into a power port of computing device 1502 (e.g., a USB port, an A/C power port). LI receiver 1584 is useable for location determination of computing device 1502 and in examples includes a satellite navigation receiver such as a Global Positioning System (GPS) receiver and/or includes other type of location determiner configured to determine location of computing device 1502 based on received information (e.g., using cell tower triangulation, etc.). Accelerometer 1586, when present, is configured to determine an orientation of computing device 1502.

Note that the illustrated components of computing device 1502 are not required or all-inclusive, and fewer or greater numbers of components can be present as would be recognized by one skilled in the art. In examples, computing device 1502 includes one or more of a gyroscope, barometer, proximity sensor, ambient light sensor, digital compass, etc. In an example, processor 1510 and memory 1556 are co-located in a same semiconductor device package, such as being included together in an integrated circuit chip, FPGA, or system-on-chip (SOC), optionally along with further components of computing device 1502.

In embodiments, computing device 1502 is configured to implement any of the above-described features of flowcharts herein. Computer program logic for performing any of the operations, steps, and/or functions described herein is stored in storage 1520 and executed by processor 1510.

In some embodiments, server infrastructure 1570 is present in computing environment 1500 and is communicatively coupled with computing device 1502 via network 1504. Server infrastructure 1570, when present, is a network-accessible server set (e.g., a cloud-based environment or platform). As shown in FIG. 15, server infrastructure 1570 includes clusters 1572. Each of clusters 1572 comprises a group of one or more compute nodes and/or a group of one or more storage nodes. For example, as shown in FIG. 15, cluster 1572 includes nodes 1574. Each of nodes 1574 are accessible via network 1504 (e.g., in a "cloud-based" embodiment) to build, deploy, and manage applications and services. In examples, any of nodes 1574 is a storage node that comprises a plurality of physical storage disks, SSDs, and/or other physical storage devices that are accessible via network 1504 and are configured to store data associated with the applications and services managed by nodes 1574.

Each of nodes 1574, as a compute node, comprises one or more server computers, server systems, and/or computing devices. For instance, a node 1574 in accordance with an embodiment includes one or more of the components of computing device 1502 disclosed herein. Each of nodes 1574 is configured to execute one or more software applications (or "applications") and/or services and/or manage hardware resources (e.g., processors, memory, etc.), which are utilized by users (e.g., customers) of the network-accessible server set. In examples, as shown in FIG. 15, nodes 1574 includes a node 1546 that includes storage 1548 and/or one or more of a processor 1558 (e.g., similar to processor 1510, GPU 1542, and/or NPU 1544 of computing device 1502). Storage 1548 stores application programs 1576 and application data 1578. Processor(s) 1558 operate application programs 1576 which access and/or generate related application data 1578. In an implementation, nodes such as node 1546 of nodes 1574 operate or comprise one or more virtual machines, with each virtual machine emulating a system architecture (e.g., an operating system), in an isolated manner, upon which applications such as application programs 1576 are executed.

In embodiments, one or more of clusters 1572 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 1572 are included in a datacenter in a distributed collection of datacenters. In embodiments, exemplary computing environment 1500 comprises part of a cloud-based platform.

In an embodiment, computing device 1502 accesses application programs 1576 for execution in any manner, such as by a client application and/or a browser at computing device 1502.

In an example, for purposes of network (e.g., cloud) backup and data security, computing device 1502 additionally and/or alternatively synchronizes copies of application programs 1514 and/or application data 1516 to be stored at network-based server infrastructure 1570 as application programs 1576 and/or application data 1578. In examples, operating system 1512 and/or application programs 1514 include a file hosting service client configured to synchronize applications and/or data stored in storage 1520 at network-based server infrastructure 1570.

In some embodiments, on-premises servers 1592 are present in computing environment 1500 and are communicatively coupled with computing device 1502 via network 1504. On-premises servers 1592, when present, are hosted within an organization's infrastructure and, in many cases, physically onsite of a facility of that organization. On-premises servers 1592 are controlled, administered, and maintained by IT (Information Technology) personnel of the organization or an IT partner to the organization. Application data 1598 can be shared by on-premises servers 1592 between computing devices of the organization, including computing device 1502 (when part of an organization) through a local network of the organization, and/or through further networks accessible to the organization (including the Internet). Furthermore, in examples, on-premises servers 1592 serve applications such as application programs 1596 to the computing devices of the organization, including computing device 1502. Accordingly, in examples, on-premises servers 1592 include storage 1594 (which includes one or more physical storage devices such as storage disks and/or SSDs) for storage of application programs 1596 and application data 1598 and include a processor 1590 (e.g., similar to processor 1510, GPU 1542, and/or NPU 1544 of computing device 1502) for execution of application programs 1596. In some embodiments, multiple processors 1590 are present for execution of application programs 1596 and/or for other purposes. In further examples, computing device 1502 is configured to synchronize copies of application programs 1514 and/or application data 1516 for spill storage at on-premises servers 1592 as application programs 1596 and/or application data 1598.

Embodiments described herein may be implemented in one or more computing device 1502, network-based server infrastructure 1570, and on-premises servers 1592. For example, in some embodiments, computing device 1502 is used to implement systems, clients, or devices, or components/subcomponents thereof, disclosed elsewhere herein. In other embodiments, a combination of computing device 1502, network-based server infrastructure 1570, and/or on-premises servers 1592 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 1520. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 1514) are stored in storage 1520. Such computer programs can also be received via wired interface(s) 1560 and/or wireless modem(s) 1560 over network 1504. Such computer programs, when executed or loaded by an application, enable computing device 1502 to implement features of embodiments discussed herein. Accordingly, such computer programs represent controllers of the computing device 1502.

Embodiments are also directed to computer program products comprising computer code or instructions stored on any computer-readable medium or computer-readable storage medium. Such computer program products include the physical storage of storage 1520 as well as further physical storage types.

### VIII. Additional Example Embodiments

A network interface controller (NIC) is described herein. The NIC: receives, from a first computing device, a read request for reading data or a write request for writing data. The NIC accesses a first ring to obtain a pointer indicating an address of a memory region that data is to be read from or written to. The NIC performs the reads data from or writes data to the memory region based on the address indicated by the pointer. The NIC updates a second ring to indicate an address of the memory region data was read from or written to.

In a further embodiment of the foregoing NIC, the NIC is a hardware network interface circuit.

In a further embodiment of the foregoing NIC, a third computing device comprises the NIC and a ring data-structure. The ring data-structure comprises the first and second rings.

In a further embodiment of the foregoing NIC, a system comprises the NIC.

In a further embodiment of the foregoing NIC, the system comprises the third computing device.

In a further embodiment of the foregoing NIC, the system comprises the NIC and the memory region.

In a further embodiment of the foregoing NIC, the NIC determines a storage capacity of the plurality of memory regions satisfies a first storage criterion, transfers the first data from the first memory region to a spill storage device, and causes the first ring buffer to comprise a third pointer indicating the address of the first memory region, the first memory region being empty.

In a further embodiment of the foregoing NIC, the NIC determines the storage capacity of the plurality of memory regions satisfies a second storage criterion; determines, based on the first ring buffer, an address of a second memory region, the second memory region being empty; transfers the first data from the spill storage device to the second memory region; and causes the second ring buffer to comprise a fourth pointer indicating the address of the second memory region storing the first data.

In a further embodiment of the foregoing NIC, the first data is associated with a first entity account. The ring data-structure further comprises: a first ring pair comprising the first ring buffer and the second ring buffer, and a second ring pair comprising a third ring buffer and a fourth ring buffer, the fourth ring buffer comprising fourth pointer indicating an address of a second memory region storing second data associated with a second entity account. The NIC further prioritizes transferring the first data from the first memory region to the spill storage device over transferring the second data from the second memory region to the spill storage device.

In a further embodiment of the foregoing NIC, to determine, based on the first pointer, the address of the first memory region, the NIC further: accesses the first ring buffer to obtain the first pointer; and provides the first pointer to the first computing device.

In a further embodiment of the foregoing NIC, to write the first data to the first memory region, the NIC further: receives, from the first computing device, a write instruction indicating the first data is to be written to the address of the first memory region; and responsive to receiving the write instruction, writes the first data to the first memory region.

In a further embodiment of the foregoing NIC, wherein the NIC further: receives, from a second computing device, a read request for reading the first data; determines, based on the second pointer, the address of the first memory region; reads the first data from the first memory region based on the address of the first memory region; and provides the first data to the second computing device.

In a further embodiment of the foregoing NIC, wherein the second ring buffer comprises a third pointer indicating an address of a second memory region storing second data. To determine, based on the second pointer, the address of the first memory region, the NIC further: accesses the second ring buffer to obtain the second pointer and the third pointer; and provides the second pointer and the third pointer to the second computing device.

In a further embodiment of the foregoing NIC, the second computing device comprises: a memory device comprising the memory region; and the NIC.

In a further embodiment of the foregoing NIC, wherein to update the second ring buffer to comprise the second pointer, the NIC further: transfers the first pointer from the first ring buffer to the second ring buffer as the second pointer.

In a further embodiment of the foregoing NIC, wherein to update the second ring buffer to comprise the second pointer, the NIC further: removes the first pointer from the first ring buffer; and enqueues the second pointer to the second ring buffer.

In a further embodiment of the foregoing NIC, the NIC and the memory device are incorporated in a one-sided RDMA device.

A method performed by a NIC is described herein. The method comprises: receiving, from a first computing device, a read request for reading data or a write request for writing data; accessing a first ring to obtain a pointer indicating an address of a memory region that data is to be read from or written to; performing the reads data from or writes data to the memory region based on the address indicated by the pointer; updating a second ring to indicate an address of the memory region data was read from or written to.

In a further embodiment of the foregoing method, the NIC is a hardware network interface circuit.

In a further embodiment of the foregoing method, a third computing device comprises the NIC and a ring data-structure. The ring data-structure comprises the first and second rings.

In a further embodiment of the foregoing method, the method further comprises: determining a storage capacity of the plurality of memory regions satisfies a first storage criterion; transferring the first data from the first memory region to a spill storage device; and causing the first ring buffer to comprise a third pointer indicating the address of the first memory region, the first memory region being empty.

In a further embodiment of the foregoing method, the method further comprises: determining the storage capacity of the plurality of memory regions satisfies a second storage criterion; determining, based on the first ring buffer, an address of a second memory region, the second memory region being empty; transferring the first data from the spill storage device to the second memory region; and causing the second ring buffer to comprise a fourth pointer indicating the address of the second memory region storing the first data.

In a further embodiment of the foregoing method, the first data is associated with a first entity account. The ring data-structure further comprises: a first ring pair comprising the first ring buffer and the second ring buffer, and a second ring pair comprising a third ring buffer and a fourth ring buffer, the fourth ring buffer comprising fourth pointer indicating an address of a second memory region storing second data associated with a second entity account. The method further comprises: prioritizing transfer of the first data from the first memory region to the spill storage device over transfer of the second data from the second memory region to the spill storage device.

In a further embodiment of the foregoing method, said determining, based on the first pointer, the address of the first memory region further comprises: accessing the first ring buffer to obtain the first pointer; and providing the first pointer to the first computing device.

In a further embodiment of the foregoing method, said writing the first data to the first memory region further comprises: receiving, from the first computing device, a write instruction indicating the first data is to be written to the address of the first memory region; and responsive to receiving the write instruction, writing the first data to the first memory region.

In a further embodiment of the foregoing method, the method further comprises: receiving, from a second computing device, a read request for reading the first data; determining, based on the second pointer, the address of the first memory region; reading the first data from the first memory region based on the address of the first memory region; and providing the first data to the second computing device.

In a further embodiment of the foregoing method, wherein the second ring buffer comprises a third pointer indicating an address of a second memory region storing second data. Said determining, based on the second pointer, the address of the first memory region further comprises: accessing the second ring buffer to obtain the second pointer and the third pointer; and providing the second pointer and the third pointer to the second computing device.

In a further embodiment of the foregoing method, the second computing device comprises: a memory device comprising the memory region; and the NIC.

In a further embodiment of the foregoing method, said updating the second ring buffer to comprise the second pointer further comprises: transferring the first pointer from the first ring buffer to the second ring buffer as the second pointer.

In a further embodiment of the foregoing method, said updating the second ring buffer to comprise the second pointer further comprises: removing the first pointer from the first ring buffer; and enqueuing the second pointer to the second ring buffer.

In a further embodiment of the foregoing method, the NIC and the memory device are incorporated in a one-sided RDMA device.

A computer readable storage medium is described herein. The computer readable storage medium comprising programming instructions encoded thereon. The programming instructions structured to cause a processor to perform any of the foregoing methods.

Another computer readable storage medium is described herein. The computer readable storage medium comprising programming instructions encoded thereon. The programming instructions structured to cause a NIC to perform any of the foregoing methods.

### IX. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In the discussion, unless otherwise stated, adjectives modifying a condition or relationship characteristic of a feature or features of an implementation of the disclosure, should be understood to mean that the condition or characteristic is defined to within tolerances that are acceptable for operation of the implementation for an application for which it is intended. Furthermore, if the performance of an operation is described herein as being "in response to" one or more factors, it is to be understood that the one or more factors may be regarded as a sole contributing factor for causing the operation to occur or a contributing factor along with one or more additional factors for causing the operation to occur, and that the operation may occur at any time upon or after establishment of the one or more factors. Still further, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

Numerous example embodiments have been described above. Any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

Furthermore, example embodiments have been described above with respect to one or more running examples. Such running examples describe one or more particular implementations of the example embodiments; however, embodiments described herein are not limited to these particular implementations.

Moreover, according to the described embodiments and techniques, any components of systems, applications, computing devices, RDMA devices, ring data-structures, NICs, spill storages, and their functions may be caused to be activated for operation/performance thereof based on other operations, functions, actions, and/or the like, including initialization, completion, and/or performance of the operations, functions, actions, and/or the like.

In some example embodiments, one or more of the operations of the flowcharts described herein may not be performed. Moreover, operations in addition to or in lieu of the operations of the flowcharts described herein may be performed. Further, in some example embodiments, one or more of the operations of the flowcharts described herein may be performed out of order, in an alternate sequence, or partially (or completely) concurrently with each other or with other operations.

The embodiments described herein and/or any further systems, sub-systems, devices and/or components disclosed herein may be implemented in hardware (e.g., hardware logic/electrical circuitry), or any combination of hardware with software (computer program code configured to be executed in one or more processors or processing devices) and/or firmware.

While various embodiments have been described above, it should be understood that they have been presented by way of example only, and not limitation. It will be apparent to persons skilled in the relevant art that various changes in form and detail can be made therein without departing from the spirit and scope of the embodiments. Thus, the breadth and scope of the embodiments should not be limited by any of the above-described example embodiments, but should be defined only in accordance with the following claims and their equivalents.
**The following is a list of further preferred embodiments of the invention:**
Embodiment 1. A system, comprising:
   a remote direct memory access (RDMA) memory device comprising:
   a plurality of memory regions,
   a first ring buffer comprising a first pointer indicating an address of a first memory region of the plurality of memory regions, the first memory region being empty, and
   a second ring buffer; and
   an RDMA network interface controller (NIC) that:
      receives, from a first computing device, a write request for writing first data to one of the plurality of memory regions,
      determines, based on the first pointer, the address of the first memory region,
      writes the first data to the first memory region based on the address of the first memory region, and
      updates the second ring buffer to comprise a second pointer indicating the address of the first memory region storing the first data.
Embodiment 2. The system of embodiment 1, wherein:
   the system further comprises an overflow manager that:
   determines a storage capacity of the plurality of memory regions satisfies a first storage criterion, and
   transfers the first data from the first memory region to a spill storage device; and
   the RDMA NIC causes the first ring buffer to comprise a third pointer indicating the address of the first memory region, the first memory region being empty.
Embodiment 3. The system of embodiment 2, wherein:
   the overflow manager further:
   determines the storage capacity of the plurality of memory regions satisfies a second storage criterion,
   determines, based on the first ring buffer, an address of a second memory region, the second memory region being empty, and
   transfers the first data from the spill storage device to the second memory region; and
   the RDMA NIC causes the second ring buffer to comprise a fourth pointer indicating the address of the second memory region storing the first data.
Embodiment 4. The system of embodiment 2, wherein:
   the first data is associated with a first entity account;
   the RDMA memory device further comprises:
      a first ring pair comprising the first ring buffer and the second ring buffer, and
      a second ring pair comprising a third ring buffer and a fourth ring buffer, the fourth ring buffer comprising fourth pointer indicating an address of a second memory region storing second data associated with a second entity account; and
      the overflow manager further:
         prioritizes transferring the first data from the first memory region to the spill storage device over transferring the second data from the second memory region to the spill storage device.
Embodiment 5. The system of embodiment 1, wherein to determine, based on the first pointer, the address of the first memory region, the RDMA NIC further:
   accesses the first ring buffer to obtain the first pointer; and
   provides the first pointer to the first computing device.
Embodiment 6. The system of embodiment 5, wherein to write the first data to the first memory region, the RDMA NIC further:
   receives, from the first computing device, a write instruction indicating the first data is to be written to the address of the first memory region; and
   responsive to receiving the write instruction, writes the first data to the first memory region.
Embodiment 7. The system of embodiment 1, wherein the RDMA NIC further:
   receives, from a second computing device, a read request for reading the first data;
   determines, based on the second pointer, the address of the first memory region;
   reads the first data from the first memory region based on the address of the first memory region; and
   provides the first data to the second computing device.
Embodiment 8. The system of embodiment 7, wherein the second ring buffer comprises a third pointer indicating an address of a second memory region storing second data, and to determine, based on the second pointer, the address of the first memory region, the RDMA NIC further:
   accesses the second ring buffer to obtain the second pointer and the third pointer; and
   provides the second pointer and the third pointer to the second computing device.
Embodiment 9. The system of embodiment 1, wherein to update the second ring buffer to comprise the second pointer, the RDMA NIC further:
   transfers the first pointer from the first ring buffer to the second ring buffer as the second pointer.
Embodiment 10. A method for facilitating data operations in a computing system, the method comprising:
   receiving, from a first computing device, a write request for writing data to a memory device, the memory device comprising a first memory region, a first ring buffer, and a second ring buffer, the first ring buffer comprising a first pointer indicating an address of the first memory region;
   determining the first memory region is an empty memory region based on the first ring buffer comprising the first pointer;
   writing the data to the first memory region based on the address of the first memory region; and
   updating the second ring buffer to comprise a second pointer indicating the address of the first memory region storing the first data.
Embodiment 11. The method of embodiment 10, further comprising:
   determining a storage capacity of the memory device satisfies a first storage criterion,
   transferring the first data from the first memory region to a spill storage device, and
   causing the first ring buffer to comprise a third pointer indicating the address of the first memory region, the first memory region being empty.
Embodiment 12. The method of embodiment 11, further comprising:
   determining the storage capacity of the memory device satisfies a second storage criterion;
   determining, based on the first ring buffer, an address of a second memory region, the second memory region being empty;
   transferring the first data from the spill storage device to the second memory region; and
   causing the second ring buffer to comprise a fourth pointer indicating the address of the second memory region storing the first data.
Embodiment 13. The method of embodiment 10, wherein said determining the first memory region is an empty region comprises:
   accessing the first ring buffer to obtain the first pointer; and
   providing the first pointer to the first computing device.
Embodiment 14. The method of embodiment 13, wherein:
   the memory device is an RDMA memory device;
   said providing the first pointer to the first computing device causes the first computing device to generate a write instruction specifying the address of the first memory region as a target of the write instruction; and
   said writing the data to the first memory region comprises:
      receiving the write instruction from the first computing device, and
      utilizing a write operation to write the data to the first memory region.
Embodiment 15. The method of embodiment 11, further comprising:
   receiving, from a second computing device, a read request for reading the first data;
   determining, based on the second pointer, the address of the first memory region;
   reading the first data from the first memory region based on the address of the first memory region; and
   providing the first data to the second computing device.
Embodiment 16. A remote direct memory access (RDMA) device comprising:
   a ring data-structure comprising:
   a first ring buffer comprising a first pointer indicating an address of a first memory region of a memory device, the first memory region storing first data, and
   a second ring buffer; and
   an RDMA network interface controller (NIC) that:
      receives, from a first computing device, a read request for reading the first data,
      receives the first pointer from the first ring buffer,
      reads the first data from the first memory region based on the address indicated by the first pointer,
      provides the first data to the first computing device, and
      updates the second ring buffer to comprise a second pointer indicating the address of the first memory region, the first memory region being empty.
Embodiment 17. The RDMA device of embodiment 16, wherein the first ring buffer comprises a third pointer indicating an address of a second memory region storing second data, and to receive the first pointer from the first ring buffer, the RDMA NIC further:
   receives the first and third pointer from the first ring buffer.
Embodiment 18. The RDMA device of embodiment 17, wherein RDMA NIC further:
   provides the first pointer and the third pointer to the first computing device; and
   receives, from the first computing device, a read instruction indicating the first data is to be read from the first memory region.
Embodiment 19. The system of embodiment 1, wherein the RDMA NIC further:
   determines a storage capacity of the plurality of memory regions satisfies a first storage criterion;
   transfers the first data from the first memory region to a spill storage device; and
   causes the first ring buffer to comprise a third pointer indicating the address of the first memory region, the first memory region being empty.
Embodiment 20. The RDMA device of embodiment 16, wherein the RDMA NIC further:
   receives, from a second computing device, a write request for writing second data to the memory device;
   determines, based on the second pointer, the address of the first memory region;
   writes the second data to the first memory region based on the address of the first memory region; and
   updates the first ring buffer to comprise a third pointer indicating the address of the first memory region storing the second data.

## Claims

1. A system, comprising:
a remote direct memory access (RDMA) memory device comprising:
a plurality of memory regions,
a first ring buffer comprising a first pointer indicating an address of a first memory region of the plurality of memory regions, the first memory region being empty, and
a second ring buffer; and
an RDMA network interface controller (NIC) that:
receives, from a first computing device, a write request for writing first data to one of the plurality of memory regions,
determines, based on the first pointer, the address of the first memory region,
writes the first data to the first memory region based on the address of the first memory region, and
updates the second ring buffer to comprise a second pointer indicating the address of the first memory region storing the first data.

2. The system of claim 1, wherein:
the system further comprises an overflow manager that:
determines a storage capacity of the plurality of memory regions satisfies a first storage criterion, and
transfers the first data from the first memory region to a spill storage device; and
the RDMA NIC causes the first ring buffer to comprise a third pointer indicating the address of the first memory region, the first memory region being empty.

3. The system of claim 2, wherein:
the overflow manager further:
determines the storage capacity of the plurality of memory regions satisfies a second storage criterion,
determines, based on the first ring buffer, an address of a second memory region, the second memory region being empty, and
transfers the first data from the spill storage device to the second memory region; and
the RDMA NIC causes the second ring buffer to comprise a fourth pointer indicating the address of the second memory region storing the first data.

4. The system of claim 2, wherein:
the first data is associated with a first entity account;
the RDMA memory device further comprises:
a first ring pair comprising the first ring buffer and the second ring buffer, and
a second ring pair comprising a third ring buffer and a fourth ring buffer, the fourth ring buffer comprising fourth pointer indicating an address of a second memory region storing second data associated with a second entity account; and
the overflow manager further:
prioritizes transferring the first data from the first memory region to the spill storage device over transferring the second data from the second memory region to the spill storage device.

5. The system of one of claims 1 to 4, wherein to determine, based on the first pointer, the address of the first memory region, the RDMA NIC further:
accesses the first ring buffer to obtain the first pointer; and
provides the first pointer to the first computing device, and/or
wherein to write the first data to the first memory region, the RDMA NIC further:
receives, from the first computing device, a write instruction indicating the first data is to be written to the address of the first memory region; and
responsive to receiving the write instruction, writes the first data to the first memory region.

6. The system of one of claims 1 to 5, wherein the RDMA NIC further:
receives, from a second computing device, a read request for reading the first data;
determines, based on the second pointer, the address of the first memory region;
reads the first data from the first memory region based on the address of the first memory region; and
provides the first data to the second computing device, and/or
wherein the second ring buffer comprises a third pointer indicating an address of a second memory region storing second data, and to determine, based on the second pointer, the address of the first memory region, the RDMA NIC further:
accesses the second ring buffer to obtain the second pointer and the third pointer; and
provides the second pointer and the third pointer to the second computing device.

7. The system of one of claims 1 to 6, wherein to update the second ring buffer to comprise the second pointer, the RDMA NIC further:
transfers the first pointer from the first ring buffer to the second ring buffer as the second pointer.

8. A method for facilitating data operations in a computing system, the method comprising:
receiving, from a first computing device, a write request for writing data to a memory device, the memory device comprising a first memory region, a first ring buffer, and a second ring buffer, the first ring buffer comprising a first pointer indicating an address of the first memory region;
determining the first memory region is an empty memory region based on the first ring buffer comprising the first pointer;
writing the data to the first memory region based on the address of the first memory region; and
updating the second ring buffer to comprise a second pointer indicating the address of the first memory region storing the first data.

9. The method of claim 8, further comprising:
determining a storage capacity of the memory device satisfies a first storage criterion,
transferring the first data from the first memory region to a spill storage device, and
causing the first ring buffer to comprise a third pointer indicating the address of the first memory region, the first memory region being empty, and/or
further comprising:
determining the storage capacity of the memory device satisfies a second storage criterion;
determining, based on the first ring buffer, an address of a second memory region, the second memory region being empty;
transferring the first data from the spill storage device to the second memory region; and
causing the second ring buffer to comprise a fourth pointer indicating the address of the second memory region storing the first data.

10. The method of one of claims 8 or 9, wherein said determining the first memory region is an empty region comprises:
accessing the first ring buffer to obtain the first pointer; and
providing the first pointer to the first computing device, and/or
wherein:
the memory device is an RDMA memory device;
said providing the first pointer to the first computing device causes the first computing device to generate a write instruction specifying the address of the first memory region as a target of the write instruction; and
said writing the data to the first memory region comprises:
receiving the write instruction from the first computing device, and
utilizing a write operation to write the data to the first memory region.

11. The method of one of claims 8 to 10, further comprising:
receiving, from a second computing device, a read request for reading the first data;
determining, based on the second pointer, the address of the first memory region;
reading the first data from the first memory region based on the address of the first memory region; and
providing the first data to the second computing device.

12. A remote direct memory access (RDMA) device comprising:
a ring data-structure comprising:
a first ring buffer comprising a first pointer indicating an address of a first memory region of a memory device, the first memory region storing first data, and
a second ring buffer; and
an RDMA network interface controller (NIC) that:
receives, from a first computing device, a read request for reading the first data,
receives the first pointer from the first ring buffer,
reads the first data from the first memory region based on the address indicated by the first pointer,
provides the first data to the first computing device, and
updates the second ring buffer to comprise a second pointer indicating the address of the first memory region, the first memory region being empty.

13. The RDMA device of claim 12, wherein the first ring buffer comprises a third pointer indicating an address of a second memory region storing second data, and to receive the first pointer from the first ring buffer, the RDMA NIC further:
receives the first and third pointer from the first ring buffer, and/or
wherein RDMA NIC further:
provides the first pointer and the third pointer to the first computing device; and
receives, from the first computing device, a read instruction indicating the first data is to be read from the first memory region.

14. The system of one of claims 1 to 13, wherein the RDMA NIC further:
determines a storage capacity of the plurality of memory regions satisfies a first storage criterion;
transfers the first data from the first memory region to a spill storage device; and
causes the first ring buffer to comprise a third pointer indicating the address of the first memory region, the first memory region being empty.

15. The RDMA device of one of claims 12 to 14, wherein the RDMA NIC further:
receives, from a second computing device, a write request for writing second data to the memory device;
determines, based on the second pointer, the address of the first memory region;
writes the second data to the first memory region based on the address of the first memory region; and
updates the first ring buffer to comprise a third pointer indicating the address of the first memory region storing the second data.
